# EUROPEAN PATENT SPECIFICATION

(11) **EP 3 407 132 B1**
(45) Date of publication and mention of the grant of the patent: **04.05.2022**
(21) Application number: 17741302.8
(22) Date of filing: 13.01.2017
(51) Int. Cl.: G03B 21/14, F21S 2/00, F21V 5/00, F21V 5/04, F21V 7/09, F21V 7/22, F21V 9/14, F21V 15/01, F21V 15/04, F21V 17/00, F21Y 101/00, G03B 21/20

(54) **LIGHT SOURCE DEVICE AND PROJECTOR**
LICHTQUELLENVORRICHTUNG UND PROJEKTOR
DISPOSITIF SOURCE DE LUMIÈRE ET PROJECTEUR

(30) Priority: 20.01.2016 JP 2016009316
(43) Date of publication of application: 28.11.2018
(73) Proprietor: Seiko Epson Corporation, Tokyo 160-8801 (JP)
(72) Inventor: TAKIZAWA Takahiro, Suwa-shi Nagano 392-8502 (JP); TAKAGI Tomohiro, Suwa-shi Nagano 392-8502 (JP); OGAWA Yasunori, Suwa-shi Nagano 392-8502 (JP)
(74) Representative: Miller Sturt Kenyon
(86) International application number: PCT/JP2017/000980
(87) International publication number: WO 2017/126422

(56) References cited:
- WO-A1-2014/196126
- JP-A- 2001 325 813
- JP-A- 2004 004 562
- JP-A- 2004 004 562
- JP-A- 2009 092 997
- JP-A- 2010 256 457
- JP-A- 2012 528 356
- JP-A- 2013 029 796
- JP-A- 2015 028 504
- US-A1- 2010 302 514
- US-A1- 2015 270 682

## Description

### Technical Field

The present invention relates to a light source device and a projector.

### Background Art

US 2015/270682 discloses a light source arrangement having a plurality of semiconductor laser light sources, each having an optical axis. The semiconductor laser light sources are arranged in such a way that their optical axes are oriented parallel to one another so that respective laser light emission sides of the semiconductor laser light sources point in the same spatial direction. The light source arrangement further includes a deflection unit configured to collect and influence beam paths of the laser light emitted by the semiconductor laser light sources in order to form a beam bundle. The semiconductor laser light sources are arranged on a surface of a carrier, distributed at least two-dimensionally over the surface.

Traditionally, a projector is known which has: a light source; a light modulation device modulating light emitted from the light source and thus forming an image corresponding to image information; and a projection optical device projecting the formed image.

As such a projector, a projector having a light source section is known, the light source section including: an LD array made up of a plurality of LDs (laser diodes) being arrayed, the LDs emitting a blue laser beam; a color wheel in which a transmission diffuser transmitting the laser beam in a diffused manner and a phosphor layer emitting green light by being irradiated with the laser beam are arranged in separate areas; and an LED (light emitting diode) emitting red light (see, for example, PTL 2).

The light source section of the projector described in this PTL 2 has a mirror array, two lenses, and a dichroic mirror, in addition to the foregoing components.

A laser beam emitted from the LD array, after being reflected by the mirror array, becomes condensed and parallelized by the two lenses and becomes incident on the color wheel via the dichroic mirror. When this laser beam becomes incident on the transmission diffuser, the laser beam is emitted in a diffused manner from the color wheel and becomes incident as blue light on a micromirror element as a light modulation device via the mirror and the lenses or the like. Meanwhile, when the laser beam becomes incident on the phosphor layer, green light is generated. The green light travels backward along the optical path, becomes incident on the diachronic mirror, and becomes incident on the micromirror element via the dichroic mirror and the other mirror or the like. Also, red light emitted from the LED becomes incident on the micromirror element via the dichroic mirror and the other mirror or the like. The micromirror element forms an image corresponding to the incident color light. The image is projected and displayed on a screen by a projection lens unit as a projection optical device.

### Citation List

### Patent Literature

PTL1: US 2015/270682 PTL 2: JP-A-2013-195797

### Summary of Invention

### Technical Problem

Recently, higher luminance of projected images is increasingly demanded. In response to this, a configuration including a plurality of LD arrays and a light combining member combining light emitted from the plurality of LD arrays is proposed. Such a light source section has the problem that the light emitted from the respective LD arrays cannot be properly combined together by the light combining member if the placement accuracy of each LD array and the light combining member is not high.

Meanwhile, a luminous flux emitted from an LD array has a large diameter and is therefore condensed and parallelized by two lenses, as in the light source section described in the foregoing PTL 2.

As the lens situated on the light incident side of these lenses, a spherical lens is often employed. However, if such a spherical lens is employed, an increase in the diameter of the luminous flux incident on the spherical lens due to an increase in the size or the like of the LD array leads to the problem of increase in the thickness dimension (particularly the thickness dimension of a center part) of the lens and increase in the weight of the lens and hence the light source section.

The invention aims to solve at least a part of the foregoing problems. An object of the invention is to provide a light source device and a projector in which the placement accuracy of components can be improved. Another object of the invention is to provide a light source device and a projector which can be reduced in weight.

### Solution to Problem

According to an aspect of the invention, there is provided a light source device as defined in claim 1.

According to this aspect, the holding member holding the light combining member is fixed inside the light source casing with the first light source section and the second light source section attached thereto from outside. With this configuration, properly placing the holding member and the light source casing can make it easier to arrange the light combining member at a proper position on the optical path of the light emitted in two different directions from the first light source section and the second light source section. Thus, the placement accuracy of the light combining member can be improved and the light emitted from the respective light source sections can be properly combined together.

Preferably, the holding member is configured to hold the condensing lens.

According to such a configuration, the holding member holding the condensing lens is fixed inside the light source casing. This enables accurate placement of the condensing lens. Thus, the placement accuracy of the condensing lens can be improved.

Preferably, the light source device has an energizing member which energizes the condensing lens toward the holding member.

According to such a configuration, the holding member holding the condensing lens in the state where the movement of the condensing lens is regulated by the energizing member is fixed inside the light source casing. This enables further improvement in the placement accuracy of the condensing lens.

Preferably, the light source device has an optical component on which light emitted from the light source casing becomes incident, and an accommodation casing which accommodates the optical component and is connected to the light source casing, and that the accommodation casing has a first casing having an opening in which the optical component is inserted and having the inserted optical component arranged inside, and a second casing combined with the first casing to close the opening.

According to such a configuration, the accommodation casing with the optical component accommodated inside is connected to the light source casing with the light combining member accommodated inside. Thus, the light emitted from the first light source section and the second light source section and combined together can become properly incident on the optical component. This can ensure that an amount of light incident on the optical component is secured.

Also, since the first casing has the opening, the placement of the optical component in the first casing can be carried out more easily. Moreover, since the opening is closed by the second casing, the entry of dust into the first casing can be restrained.

Preferably, the light source device has an elastic member arranged between the first casing and the second casing.

With such a configuration, a gap through which dust enters the accommodation casing can be restrained from being formed between the first casing and the second casing. This can enhance the sealing inside the accommodation casing.

Preferably, one casing of the first casing and the second casing has a groove part formed along an outer edge of the one casing and with the elastic member being arranged inside the groove part, the other casing has a pressing part which is inserted in the groove part and presses the elastic member, and that the elastic member is an elastically deformable tube.

According to such a configuration, the tube as the elastic member arranged in the groove part is elastically deformed by the pressing part. This can securely restrain the gap from being formed between the inner surface of the groove part and the pressing part. Thus, the sealing inside the accommodation casing can be enhanced securely.

According to the aspect of claim 1, the aspheric lenses forming the condensing lens are arranged, corresponding to each of the plurality of light emission areas of the light source section. That is, the light emitted from one light emission area of one light source section is condensed by one aspheric lens. This can reduce the thickness dimension of the condensing lens configured with a plurality of aspheric lenses, compared with the case where one condensing lens on which all the light emitted from a plurality of light emission areas becomes incident is employed. Thus, a reduction in the weight of the condensing lens and hence the light source device can be achieved.

An increase in the thickness dimension of the condensing lens leads to the problem that then amount of light internally absorbed by the condensing lens increases, causing a reduction in the amount of light emitted from the light source device. In contrast, the foregoing configuration enables a reduction in the thickness dimension of the condensing lens. Therefore, the amount of internally absorbed light can be reduced and the reduction in the amount of light emitted from the light source device can be restrained.

Moreover, not only the first light source section but also the second light source section can be provided as the light source. The light emitted from these light source sections can be combined together and guided to the condensing lens. This can make it easier to increase the amount of light emitted from the light source device.

Generally, a light emitting element such as a solid-state light source is used not only as a single element but also in the form of a unit where light emitting elements are arranged in a matrix on a support. In such a unit, the light emitting elements are arranged in a center part of the support. Therefore, in a light source section having a plurality of such units, a gap equivalent to the foregoing first interval is generated between the light emission area in one unit and the light emission area in another unit.

In contrast, arranging the aspheric lenses corresponding to the light emission areas as described above can securely reduce the thickness dimension of the condensing lens even if a light source section having a plurality of the units is employed. Thus, the foregoing effect can be achieved securely.

Preferably, the light combining member has a plurality of first incident parts on which light emitted from the first light source section becomes incident and a plurality of second incident parts on which light emitted from the second light source section becomes incident, the plurality of first incident parts and the plurality of second incident parts are arranged along the first direction respectively, the first and second light emission areas and the third and fourth light emission areas are arranged shifted from each other in the first direction, and the first and second light source sections and the first and second aspheric lenses are arranged in such a way that the second interval corresponds to a dimension in the first direction of each of the first intervals shifted from each other in the first direction.

Preferably, the first light source section and the second light source section are attached to the light source casing in such a way that the light emitted from the first light source section and the light emitted from the second light source section intersect each other, the plurality of first incident parts is configured to transmit the light emitted from the first light source section, and the plurality of second incident parts is configured to reflect the light emitted from the second light source section towards the condensing lens.

Preferably, the first and the second aspheric lenses are made up of a Fresnel lens having a plurality of small lenses.

According to such a configuration, on one small lens of the first lens made up of a Fresnel lens, the light emitted from the light emitting element corresponding to the one small lens becomes incident. Thus, adjusting the curvature of each small lens according to the position of the light emitting element in the light emission area enables the light emitted from each light emitting element to be securely converged at a predetermined position. This can increase the condensation efficiency of the light emitted from the light source section.

Preferably, the light source device further includes a parallelizing lens which parallelizes the light incident from the condensing lens; a wavelength conversion element which converts a wavelength of a part of the light parallelized by the parallelizing lens; a diffusion element which diffuses another part of the light parallelized by the parallelizing lens; and a light combining device which combines the light converted by the wavelength conversion element and the light diffused by the diffusion element.

In the case of such a configuration, blue light can be given as an example of the light emitted from the light source section, and fluorescence including green light and red light can be given as an example of the light converted by the wavelength conversion element.

With the above configuration, a light source device which emits white light, having the light source section emitting the blue light and the wavelength conversion element emitting the fluorescent, can be formed. This can increase the versatility of the light source device.

Preferably, each of the first to fourth light emission areas is formed by a plurality of light emitting elements.

A projector according to another aspect of the invention includes the light source device; a light modulation device which modulates light emitted from the light source device; and a projection optical device which projects the light emitted from the light modulation device.

According to this aspect, effects similar to those of one of the light source device according to the first aspect and the light source device according to the second aspect can be achieved. Therefore, one of the effects that the loss of light incident on the light modulation device can be restrained, thus achieving higher luminance of a projected image, and that theweight of the projector can be reduced, can be achieved.

### Brief Description of Drawings

[FIG. 1] FIG. 1 is a perspective view showing the appearance of a projector according to an embodiment of the invention.
[FIG. 2] FIG. 2 is a schematic view showing the configuration of a device main body in the embodiment.
[FIG. 3] FIG. 3 is a schematic view showing the configuration of an illumination device in the embodiment.
[FIG. 4] FIG. 4 is a perspective view showing a light source unit in the embodiment.
[FIG. 5] FIG. 5 is a perspective view showing the light source unit in the embodiment.
[FIG. 6] FIG. 6 is a five-sided view showing the light source unit in the embodiment.
[FIG. 7] FIG. 7 is a perspective view showing a first light source section in the embodiment, as viewed from the light exiting side.
[FIG. 8] FIG. 8 is a perspective view showing an outer casing in the embodiment, as viewed from the light exiting side.
[FIG. 9] FIG. 9 is a perspective view showing an inner casing in the embodiment, as viewed from the light exiting side.
[FIG. 10] FIG. 10 is a perspective view showing the inner casing and an energizing member in the embodiment, as viewed from the light exiting side.
[FIG. 11] FIG. 11 is a cross-sectional view showing the inner casing in the embodiment.
[FIG. 12] FIG. 12 is a perspective view showing the energizing member in the embodiment.
[FIG. 13] FIG. 13 is a cross-sectional view showing the energizing member in the embodiment.
[FIG. 14] FIG. 14 is a perspective view showing the outer casing with the inner casing fixed thereto in the embodiment.
[FIG. 15] FIG. 15 is a view showing the configuration of a light combining member in the embodiment.
[FIG. 16] FIG. 16 is a perspective view showing lenses forming a condensing lens in the embodiment.
[FIG. 17] FIG. 17 is a cross-sectional view showing the first light source section, a second light source section, the light combining member, and the condensing lens in the embodiment.
[FIG. 18] FIG. 18 is a perspective view showing a light source device in the embodiment.
[FIG. 19] FIG. 19 is a perspective view showing the light source device in the embodiment.
[FIG. 20] FIG. 20 is a plan view showing the light source device with a second casing removed in the embodiment.
[FIG. 21] FIG. 21 is an exploded perspective view showing a light source device casing in the embodiment.

### Description of Embodiments

Hereinafter, an embodiment of the invention will be described, based on the drawings.

### [Outer configuration of projector]

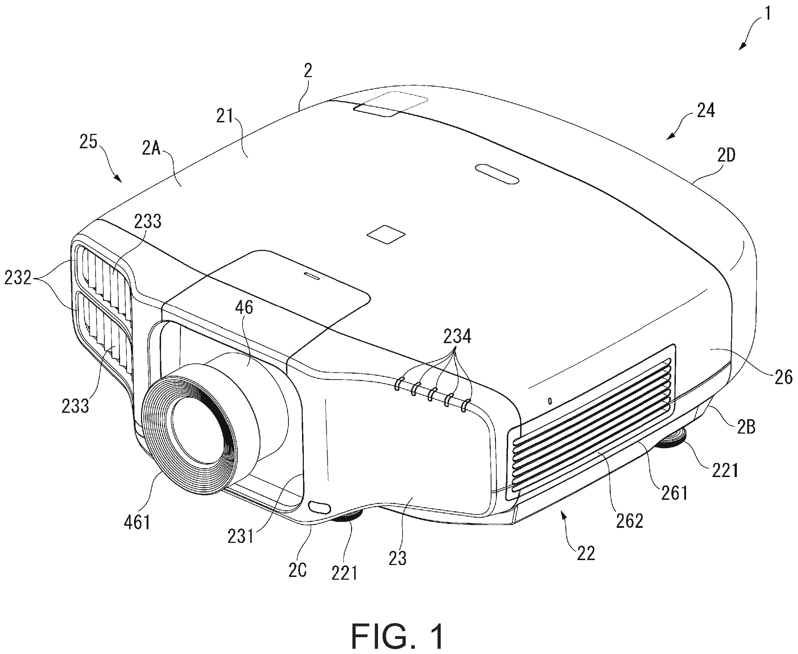

FIG. 1 is a perspective view showing the appearance of a projector 1 according to this embodiment.

The projector 1 according to this embodiment is a projection-type image display device which modulates light emitted from a light source device 5 described later, thus forms an image corresponding to image information, and projects the formed image in an enlarged manner on a projection target surface such as a screen. This projector 1 has a feature in the structure of a light source unit 6 provided in the light source device 5 and also has a feature in the configuration of a condensing lens 614 which condenses light emitted from each light source section forming the light source device 5.

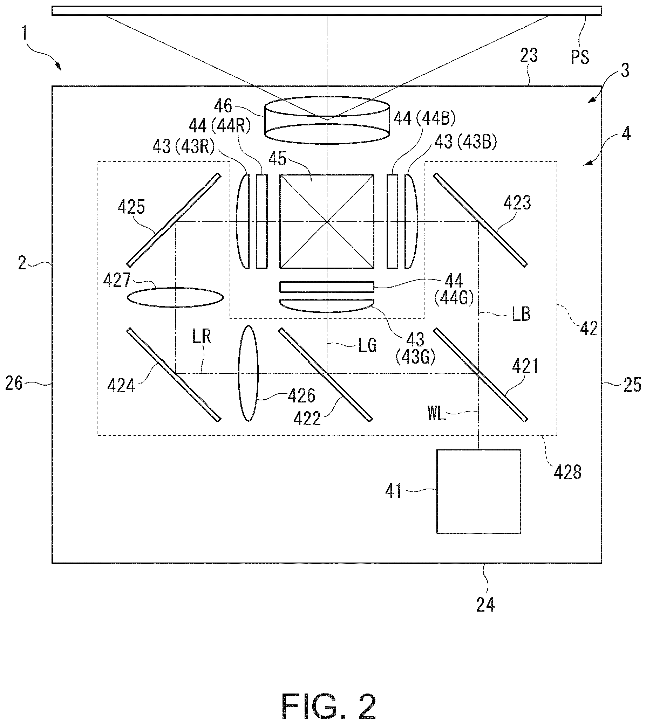

Such a projector 1 has an outer casing 2 forming an appearance as shown in FIG. 1 and accommodating a device main body 3 described later (see FIG. 2). This outer casing 2 is formed substantially in the shape of a rectangular parallelepiped made up of an upper case 2A, a lower case 2B, a front case 2C, and a rear case 2D combined together, each case being formed of synthetic resin. Such an outer casing 2 has a top face section 21, a bottom face section 22, a front face section 23, a rear face section 24, a left lateral face section 25, and a right lateral face section 26.

On the bottom face section 22, a leg part 221 which comes in contact with a placing surface when the projector 1 is placed on the placing surface is removably provided at a plurality of positions.

At a center part of the front face section 23, an opening 231 which allows an end part 461 of a projection optical device 46 described later to be exposed and through which an image projected by the projection optical device 46 passes is formed.

Also, at a position on the left lateral face section 25 side of the front face section 23, an exhaust port 232 through which a cooling gas carrying the heat inside the outer casing 2 is discharged is formed. A plurality of louvers 233 are provided in the exhaust port 232.

On the other hand, at a position on the right lateral face section 26 side of the front face section 23, a plurality of indicators 234 indicating the operation state of the projector 1 are provided.

In the right lateral face section 26, an introduction port 261 to introduce outside air to the inside as a cooling gas is formed. A cover member 262 provided with a filter (not illustrated) is attached to the introduction port 261.

### [Configuration of device main body]

FIG. 2 is a schematic view showing the configuration of the device main body 3.

The device main body 3 has an image projection device 4, as shown in FIG. 2. In addition, the device main body 3 has a control device which controls the operation of the projector 1, a power supply device which supplies electric power to electronic components forming the projector 1, and a cooling device which cools a heat generating body, though not illustrated.

Of these, the control device outputs, for example, an image signal corresponding to image information inputted from outside, to the image projection device 4, and also controls the lighting of the plurality of indicators 234.

### [Configuration of image projection device]

The image projection device 4 forms an image corresponding to an image signal inputted from the control device and projects the image on the projection target surface PS. This image projection device 4 has an illumination device 41, a color separation device 42, a parallelizing lens 43, a light modulation device 44, a color combining device 45, and a projection optical device 46.

Of these, the illumination device 41 emits illumination light WL which uniformly illuminates the light modulation device 44. The configuration of this illumination device 41 will be described in detail later.

The color separation device 42 separates blue light LB, green light LG, and red light LR out of the illumination light WL incident from the illumination device 41. This color separation device 42 has dichroic mirrors 421, 422, reflection mirrors 423, 424, 425, relay lenses 426, 427, and an optical component casing 428 which accommodates these inside.

The dichroic mirror 421 transmits the blue light LB included in the illumination light WL and reflects the green light LG and the red light LR. The blue light LB transmitted through this dichroic mirror 421 is reflected by the reflection mirror 423 and guided to the parallelizing lens 43 (43B).

The dichroic mirror 422 reflects and guides the green light LG, of the green light LG and the red light LR reflected by the dichroic mirror 421, to the parallelizing lens 43 (43G), and transmits the red light LR. This red light LR is guided to the parallelizing lens 43 (43R) via the relay lens 426, the reflection mirror 424, the relay lens 427, and the reflection mirror 425.

The parallelizing lenses 43 (the parallelizing lenses for the respective color lights of red, green, and blue are referred to as 43R, 43G, 43B) parallelize the incident light.

The light modulation devices 44 (the light modulation devices for the respective color lights of red, green, and blue are referred to as 44R, 44G, 44B) each modulate the incident color lights LR, LG, LB and form images for the respective color lights LR, LG, LB corresponding to an image signal inputted from the control device. Each of these light modulation devices 44 is formed, for example, having a liquid crystal panel which modulates the incident light, and a pair of polarizers arranged on the light incident side and the light exiting side of the liquid crystal panel.

The color combining device 45 combines the images of the color lights LR, LG, LB incident from the respective light modulation devices 44R, 44G, 44B. This color combining device 45 in this embodiment is formed of a cross dichroic prism but can also be formed of a plurality of dichroic mirrors.

The projection optical device 46 projects the images combined by the color combining device 45 onto the projection target surface PS in an enlarged manner. As such a projection optical device 46, for example, a compound lens made up of a lens barrel and a plurality of lenses arranged in the lens barrel can be employed.

### [Configuration of illumination device]

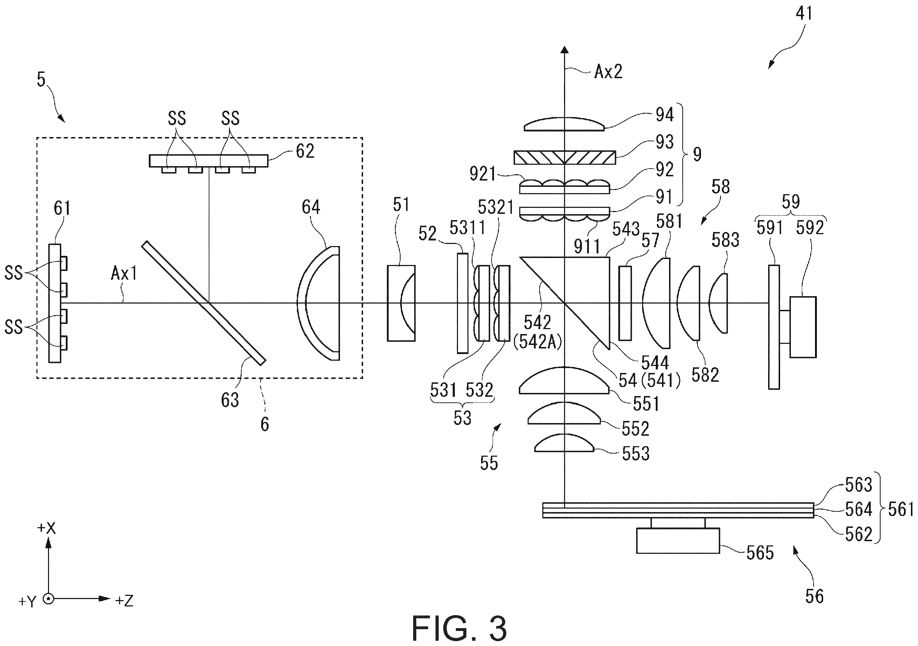

FIG. 3 is a schematic view showing the configuration of the illumination device 41.

The illumination device 41 emits the illumination light WL toward the color separation device 42, as described above. This illumination device 41 has the light source device 5 and a homogenization device 9, as shown in FIG. 3.

### [Configuration of light source device]

The light source device 5 emits a luminous flux to the homogenization device 9. This light source device 5 has the light source unit 6, a parallelizing lens 51, a first retardation element 52, a homogenizer optical device 53, a light combining device 54, a first pickup optical device 55, a wavelength conversion device 56, a second retardation element 57, a second pickup optical device 58, and a diffusion element 59, and also has an accommodation casing 7 described later.

Of these, the light source unit 6, the parallelizing lens 51, the first retardation element 52, the homogenizer optical device 53, the light combining device 54, the second retardation element 57, the second pickup optical device 58, and the diffusion element 59 are arranged on a first illumination optical axis Ax1 set in the accommodation casing 7. Meanwhile, the first pickup optical device 55 and the wavelength conversion device 56 are arranged on a second illumination optical axis Ax2 similarly set in the accommodation casing 7 and orthogonal to the first illumination optical axis Ax1. The light combining device 54 is arranged at a part where the first illumination optical axis Ax1 and the second illumination optical axis Ax2 intersect each other. The second retardation element 57, the second pickup optical device 58, and the diffusion element 59 are situated to the opposite side of the light combining device 54 from the light source unit 6, the parallelizing lens 51, the first retardation element 52, and the homogenizer optical device 53.

In the description below, the direction in which excitation light emitted from the light source unit 6 along the first illumination optical axis Ax1 travels is defined as a +Z direction. Also, of a +X direction and a +Y direction orthogonal to the +Z direction and orthogonal to each other, the +X direction is the direction in which illumination light emitted from the light source device 5 along the second illumination optical axis Ax2. Moreover, the +Y direction is the direction from the bottom face section 22 to the top face section 21. Although not illustrated, the opposite direction of the +Z direction is defined as a -Z direction, for the sake of convenience of the description. A -X direction and a -Y direction are similarly defined.

### [Configuration of light source unit]

The light source unit 6 emits excitation light which is blue light, toward the parallelizing lens 51. This light source unit 6 has a first light source section 61 and a second light source section 62 which emit excitation light in different directions from each other, a light combining member 63 which combines these excitation lights, and a condensing lens 64.

The first light source section 61 has a plurality of solid-state light sources SS which are light emitting elements, and also has a plurality of parallelizing lenses (not illustrated) provided corresponding to the solid-state light sources SS. The second light source section 62 similarly has a plurality of solid-state light sources SS and a plurality of parallelizing lenses (not illustrated). These solid-state light sources SS are formed, for example, by LDs which emit excitation light with a peak wavelength of 440 nm. However, LDs which emit excitation light with a peak wavelength of 446 nm may be employed. Also, LDs which emit excitation light with peak wavelengths of 440 nm and 446 nm may coexist as solid-state light sources SS in each of the light source sections 61, 62. The excitation light emitted from these solid-state light sources SS is parallelized by the parallelizing lenses and becomes incident on the light combining member 63. In this embodiment, the excitation light emitted from each solid-state light source SS is S-polarized light.

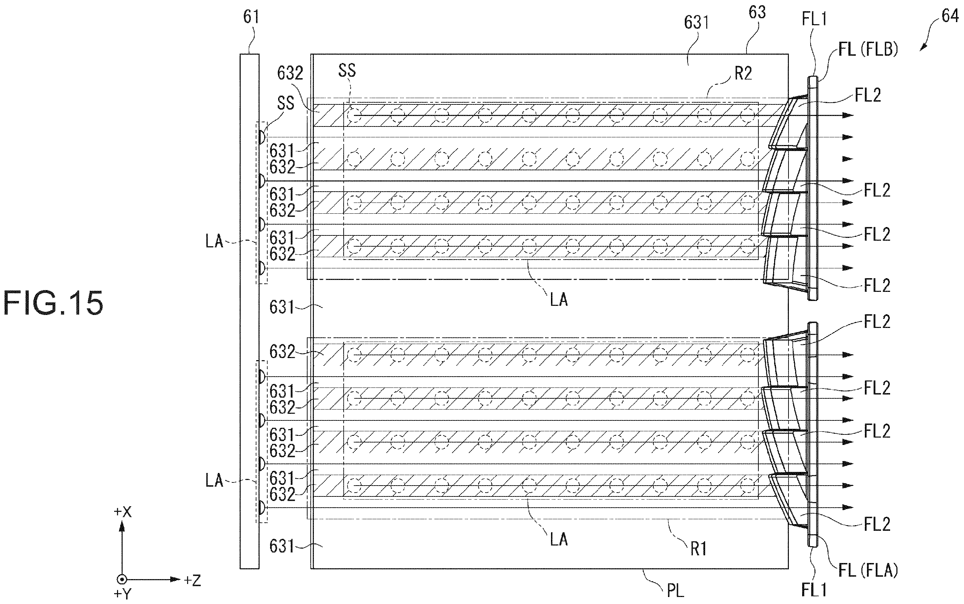

The light combining member 63 transmits the excitation light emitted from the first light source section 61 along the first illumination optical axis Ax1, reflects the excitation light emitted from the second light source section 62 along a direction intersecting the first illumination optical axis Ax1 so as to cause the excitation light to travel along the first illumination optical axis Ax1, and thus combines these excitation lights. As will be described in detail later, this light combining member 63 is formed as a plate-like body in which a plurality of transmission sections 631 (see FIG. 15) to transmit the excitation light from the first light source section 61 and a plurality of reflection sections 632 to reflect the excitation light from the second light source section 62 are arranged alternately. The excitation light traveling via such a light combining member 63 becomes incident on the condensing lens 64.

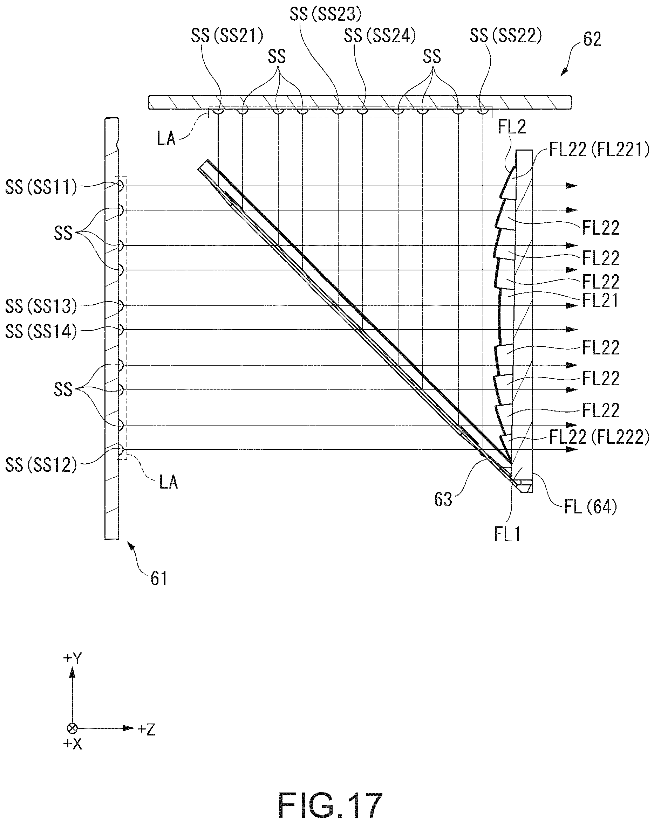

The condensing lens 64 condenses the excitation light incident via the light combining member 63, thus reduces the luminous flux diameter, and causes the excitation light to become incident on the parallelizing lens 51. As will be described in detail later, this condensing lens 64 is formed by two lenses FL (see FIG. 17), each being a Fresnel lens.

The configuration of such a light source unit 6 will be described in detail later.

In FIG. 3, in order to explain the functions of the light combining member 63, the second light source section 62 is illustrated on the +X direction side from the light combining member 63. In this embodiment, the second light source section 62 is situated on the +Y direction side from the light combining member 63. However, the second light source section 62 may be situated on the +X direction side as shown in FIG. 3 or may be situated on the -Y direction side or the -X direction side.

### [Configuration of parallelizing lens]

The parallelizing lens 51 together with the condensing lens 64 forms an afocal optical element, and parallelizes the excitation light incident from the condensing lens 64 and emits the parallelized excitation light. The condensing lens 64 and the parallelizing lens 51 adjust the luminous flux diameter of the excitation light emitted from each of the light source sections 61, 62. The excitation light traveling via this parallelizing lens 51 becomes incident on the first retardation element 52.

### [Configuration of first retardation element]

The first retardation element 52 is a half-wave plate. As the excitation light is transmitted through this first retardation element 52, a part of the S-polarized excitation light incident from the parallelizing lens 51 is converted to P-polarized excitation light. The excitation light transmitted through the first retardation element 52 is excitation light including S-polarized light and P-polarized light. This excitation light becomes incident on the homogenizer optical device 53.

In this embodiment, the first retardation element 52 is configured to be rotatable about the optical axis of the first retardation element 52 (coincident with the first illumination optical axis Ax1). As this first retardation element 52 is rotated, the proportion of S-polarized light and P-polarized light of the excitation light transmitted through the first retardation element 52 can be adjusted and therefore the white balance of the illumination light emitted from the light source device 5 can be adjusted.

### [Configuration of homogenizer optical device]

The homogenizer optical device 53, together with the first pickup optical device 55 described later, homogenizes the illuminance of the excitation light incident on a phosphor layer 563 which is an illumination target area in the wavelength conversion device 56. The excitation light transmitted through this homogenizer optical device 53 becomes incident on the light combining device 54. Such a homogenizer optical device 53 has a first multi-lens part 531 and a second multi-lens part 532.

The first multi-lens part 531 has a configuration in which a plurality of first lenses 5311 are arranged in a matrix within a plane orthogonal to the first illumination optical axis Ax1. The first multi-lens part 531 splits the incident excitation light into a plurality of partial luminous fluxes by the plurality of first lenses 5311.

The second multi-lens part 532 has a configuration in which a plurality of second lenses 5321 corresponding to the plurality of first lenses 5311 are arranged in a matrix within a plane orthogonal to the first illumination optical axis Ax1. The second multi-lens part 532 superimposes the plurality of partial luminous fluxes split by the respective first lenses 5311 on the phosphor layer 563 as the illumination target area, by collaboration between the respective second lenses 5321 and the first pickup optical device 55. Thus, the illuminance within the plane orthogonal to the center axis (within the plane orthogonal to the second illumination optical axis Ax2) of the excitation light incident on the phosphor layer 563 is homogenized.

The second multi-lens part 532 is configured to be movable along the plane orthogonal to the first illumination optical axis Ax1 (plane orthogonal to the +Z direction) and has its position adjusted in relation to the first multi-lens part 531 when the light source device 5 is manufactured (assembled).

### [Configuration of light combining device]

The light combining device 54 is a PBS (polarizing beam splitter) having a prism 541 formed substantially in the shape of a right-angled isosceles triangular prism. A face 542 corresponding to the oblique side is sloped substantially 45 degrees to each of the first illumination optical axis Ax1 and the second illumination optical axis Ax2. Of faces 543, 544 corresponding to the respective adjacent sides, the face 543 is substantially orthogonal to the second illumination optical axis Ax2, and the face 544 is substantially orthogonal to the first illumination optical axis Ax1. On the face 542, a polarization separation layer 542A having wavelength selectivity is placed.

The polarization separation layer 542A has a characteristic to separate S-polarized light and P-polarized light included in the excitation light and also has a characteristic to transmit fluorescence generated by the wavelength conversion device 56 described later, regardless of the polarization state of the fluorescence. That is, the polarization separation layer 542A has a wavelength-selective polarization separation characteristic, that is, separating S-polarized light and P-polarized light of light with a wavelength in the blue light range but transmitting each of S-polarized light and P-polarized light of light with a wavelength in the green light range and the red light range.

By such a light combining device 54, P-polarized light of the excitation light incident from the homogenizer optical device 53 is transmitted to the second retardation element 57 side along the first illumination optical axis Ax1, and S-polarized light is reflected to the first pickup optical device 55 side along the second illumination optical axis Ax2. That is, the light combining device 54 emits the P-polarized excitation light of the excitation light incident from the homogenizer optical device 53 toward the second retardation element 57 and emits the S-polarized excitation light toward the first pickup optical device 55.

As will be described in detail later, the light combining device 54 combines the fluorescence incident via the first pickup optical device 55 with the excitation light (blue light) incident via the second retardation element 57.

### [Configuration of first pickup optical device]

On the first pickup optical device 55, the S-polarized excitation light passing through the homogenizer optical device 53 and reflected by the polarization separation layer 542A becomes incident. This first pickup optical device 55 condenses (converges) the excitation light on a wavelength conversion element 561 of the wavelength conversion device 56, and also parallelizes the fluorescence emitted from the wavelength conversion element 561 and emits the parallelized fluorescence toward the polarization separation layer 542A. This first pickup optical device 55 is made up of three pickup lenses 551 to 553. However, the number of lenses provided in the first pickup optical device 55 is not limited to three.

### [Configuration of wavelength conversion device]

The wavelength conversion device 56 converts the wavelength of the incident excitation light into fluorescence. This wavelength conversion device 56 has the wavelength conversion element 561 and a rotation device 565.

Of these, the rotation device 565 is made up of a motor or the like which rotates the wavelength conversion element 561 formed in the shape of a flat plate.

The wavelength conversion element 561 has a substrate 562, and a phosphor layer 563 and a reflection layer 564 situated on the excitation light incident side of the substrate 562.

The substrate 562 is formed substantially in a circular shape as viewed from the excitation light incident side. This substrate 562 can be made of metal, ceramics or the like.

The phosphor layer 563 contains a phosphor which is excited by the incident excitation light and emits fluorescence (for example, fluorescence that is non-polarized light having a peak wavelength in a wavelength range of 500 to 700 nm). A part of the fluorescence generated in this phosphor layer 563 is emitted to the first pickup optical device 55 side. The other part is emitted to the reflection layer 564 side.

The reflection layer 564 is arranged between the phosphor layer 563 and the substrate 562 and reflects the fluorescence incident from the phosphor layer 563 to the first pickup optical device 55 side.

When the excitation light is cast on such a wavelength conversion element 561, the fluorescence is emitted in a diffused manner to the first pickup optical device 55 side by the phosphor layer 563 and the reflection layer 564. Then, the fluorescence becomes incident on the polarization separation layer 542A via the first pickup optical device 55, is transmitted through the polarization separation layer 542A along the second illumination optical axis Ax2, and becomes incident on the homogenization device 9. That is, the fluorescence generated by the wavelength conversion element 561 is emitted in the direction of the second illumination optical axis Ax2 (+X direction) by the light combining device 54.

The wavelength conversion device 56 is configured in such a way that the position of at least the phosphor layer 563 is movable along the second illumination optical axis Ax2 with respect to the first pickup optical device 55. In this embodiment, the wavelength conversion device 56 has a moving mechanism (not illustrated) which supports the rotation device 565 in such a way that the rotation device 565 is movable along the second illumination optical axis Ax2. Moving the wavelength conversion device 56 (phosphor layer 563) in this way enables adjustment of the irradiation range with the excitation light on the phosphor layer 563. Therefore, the luminous flux diameter of the fluorescence emitted in a diffused manner from the wavelength conversion device 56 can be adjusted and thus the luminous flux diameter of the fluorescence traveling toward the homogenization device 9 via the light combining device 54 can be adjusted.

### [Configuration of second retardation element, second pickup optical device, and diffusion element]

The second retardation element 57 is a quarter-wave plate and converts the polarization state of the incident P-polarized excitation light (linearly polarized light) transmitted through the light combining device 54, to circular polarization.

The second pickup optical device 58 is an optical device which condenses (converges) the excitation light transmitted through the second retardation element 57 onto the diffusion element 59. In this embodiment, the second pickup optical device 58 has three pickup lenses 581 to 583. However, the number of lenses forming the second pickup optical device 58 is not limited to three, similarly to the first pickup optical device 55.

The diffusion element 59 reflects the incident excitation light (blue light) in a diffused manner with a diffusion angle similar to that of the fluorescence diffused and emitted from the wavelength conversion device 56. This diffusion element 59 has a reflection plate 591 which reflects the incident light by Lambertian reflectance, and a rotation device 592 which rotates and thus cools down the reflection plate 591.

The excitation light reflected in a diffused manner by such a diffusion element 59 becomes incident again on the second retardation element 57 via the second pickup optical device 58. When reflected by this diffusion element 59, the circularly polarized light incident on the diffusion element 59 becomes reversely circularly polarized light. In the process of being transmitted through the second retardation element 57 again, the reversely circularly polarized excitation light is converted to S-polarized excitation light with the direction of polarization rotated 90 degrees with respect to the P-polarized light. Then, the S-polarized excitation light is reflected by the polarization separation layer 542A and becomes incident as blue light on the homogenization device 9 along the second illumination optical axis Ax2. That is, the excitation light reflected in a diffused manner by the diffusion element 59 is emitted by the light combining device 54 in the same direction as the direction in which the fluorescence passing through the light combining device 54 travels.

The pickup lenses 581 to 583 forming the second pickup optical device 58 are configured to be movable along a plane orthogonal to the first illumination optical axis Ax1 (plane orthogonal to the +Z direction). As the respective lenses 581 to 583 are thus moved, the angle of incidence on the polarization separation layer 542A of the excitation light (blue light) diffused by the diffusion element 59 and hence the tilt angle to the second illumination optical axis Ax2 of the excitation light reflected by the polarization separation layer 542A and traveling toward the homogenization device 9 can be adjusted. Also, if the second multi-lens part 532 of the homogenizer optical device 53 is moved, the optical path of the excitation light passing through the second multi-lens part 532 is changed and therefore the optical path of the excitation light passing through the lenses 581 to 583 is changed as well. Based on this, for the blue light, the movement of the lenses 581 to 583 also has the function of supplementing the change to the optical path due to the movement of the second multi-lens part 532.

Also, in this embodiment, the diffusion element 59 is configured to be movable along the first illumination optical axis Ax1. That is, though not illustrated, the diffusion element 59 has a moving mechanism which supports the reflection plate 591 in such a way that the reflection plate 591 is movable along the first illumination optical axis Ax1. As the reflection plate 591 is thus moved, the luminous flux diameter of the excitation light incident on the reflection plate 591 can be adjusted. Therefore, the luminance flux diameter of the excitation light diffused by the diffusion element 59 and hence the luminance flux diameter of the excitation light reflected by the polarization separation layer 542A and traveling toward the homogenization device 9 can be adjusted.

In this way, of the excitation light incident on the light combining device 54 via the homogenizer optical device 53, the S-polarized excitation light has its wavelength converted into the fluorescence by the wavelength conversion device 56, is subsequently transmitted through the light combining device 54, and becomes incident on the homogenization device 9. Meanwhile, the P-polarized excitation light becomes incident on and thus reflected in a diffused manner by the diffusion element 59, is transmitted through the second retardation element 57 twice, is then reflected by the light combining device 54, and becomes incident as blue light on the homogenization device 9. That is, the blue light, the green light, and the red light are combined by the light combining device 54 and emitted in the direction of the second illumination optical axis Ax2 (+X direction) and becomes incident as the white illumination light WL on the homogenization device 9.

### [Configuration of homogenization device]

The homogenization device 9 homogenizes the illuminance on a plane orthogonal to the center axis (plane orthogonal to the optical axis) of the illumination light incident from the light source device 5 and thus homogenizes the illuminance distribution in an image forming area (modulation area) which is an illumination target area in the light modulation device 44 (44R, 44G, 44B). This homogenization device 9 has a first lens array 91, a second lens array 92, a polarization conversion element 93, and a superimposing lens 94. These components 91 to 94 are arranged in such a way that the optical axes of these components coincide with the second illumination optical axis Ax2.

The first lens array 91 has a configuration in which a plurality of small lenses 911 are arranged in a matrix on a plane orthogonal to the optical axis. The first lens array 91 splits the incident illumination light into a plurality of partial luminous fluxes by the plurality of small lenses 911.

The second lens array 92, similarly to the first lens array 91, has a configuration in which a plurality of small lenses 921 are arranged in a matrix on a plane orthogonal to the optical axis. Each small lens 921 is in a one-to-one relation with the corresponding small lens 911. That is, on one small lens 921, the partial luminous flux emitted from the corresponding small lens 911 becomes incident. These small lenses 921 along with the superimposing lens 94 superimpose the plurality of partial luminous fluxes split by the respective small lenses 911 onto the image forming area in each light modulation device 44.

The polarization conversion element 93 is arranged between the second lens array 92 and the superimposing lens 94 and has the function of adjusting the plurality of incident partial luminous fluxes into the same direction of polarization.

### [Configuration of light source unit]

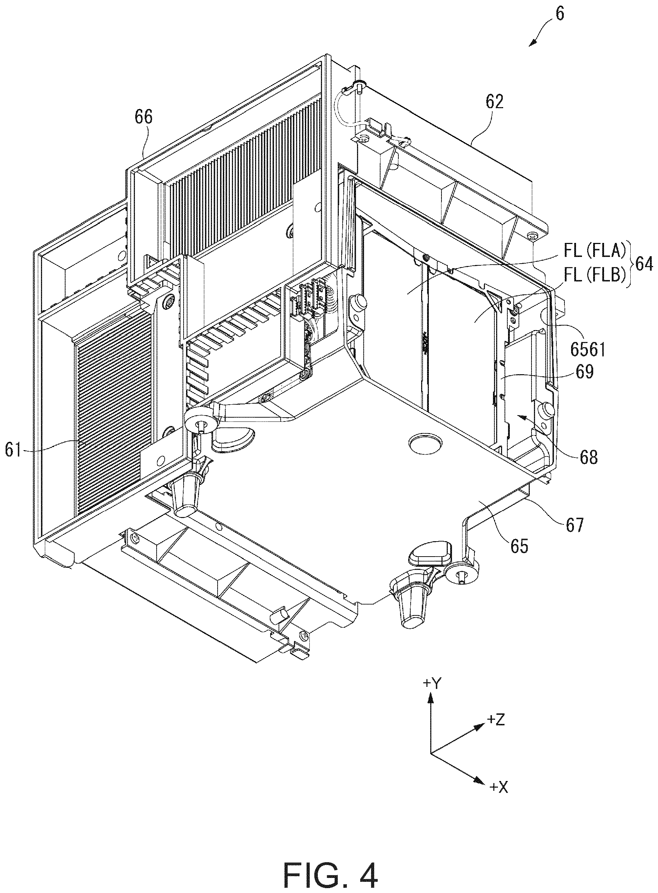

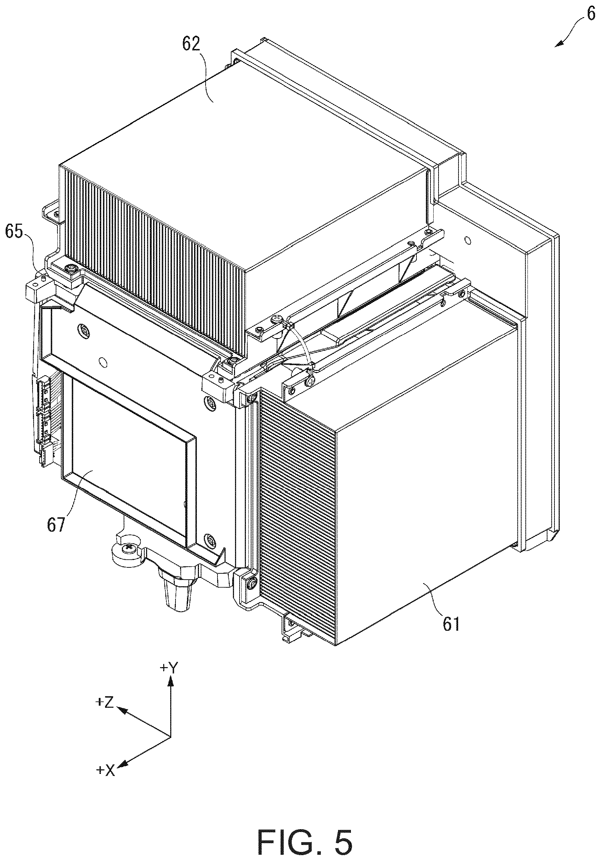

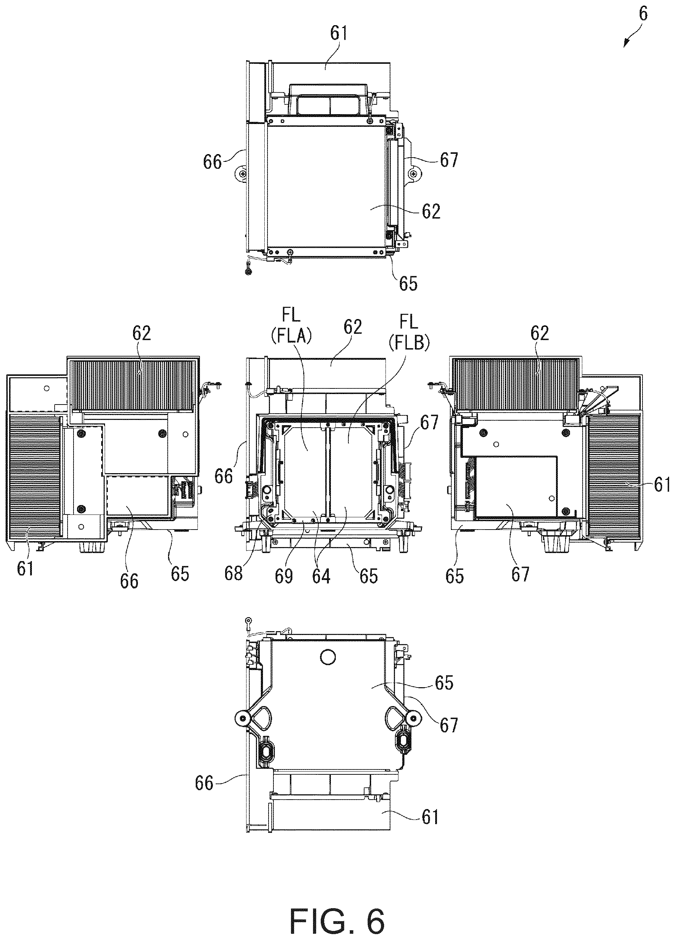

FIG. 4 is a perspective view showing the light source unit 6, as viewed from the -Y direction side and the +Z direction side. FIG. 5 is a perspective view showing the light source unit 6, as viewed from the +Y direction side and the -Z direction side. FIG. 6 is a five-sided view showing the light source unit 6.

The light source unit 6 has the first light source section 61, the second light source section 62, the light combining member 63, and the condensing lens 64, as described above, and also has an outer casing 65, cover members 66, 67, an inner casing 68, and an energizing member 69, as shown in FIGS. 4 to 6.

### [Configuration of first light source section]

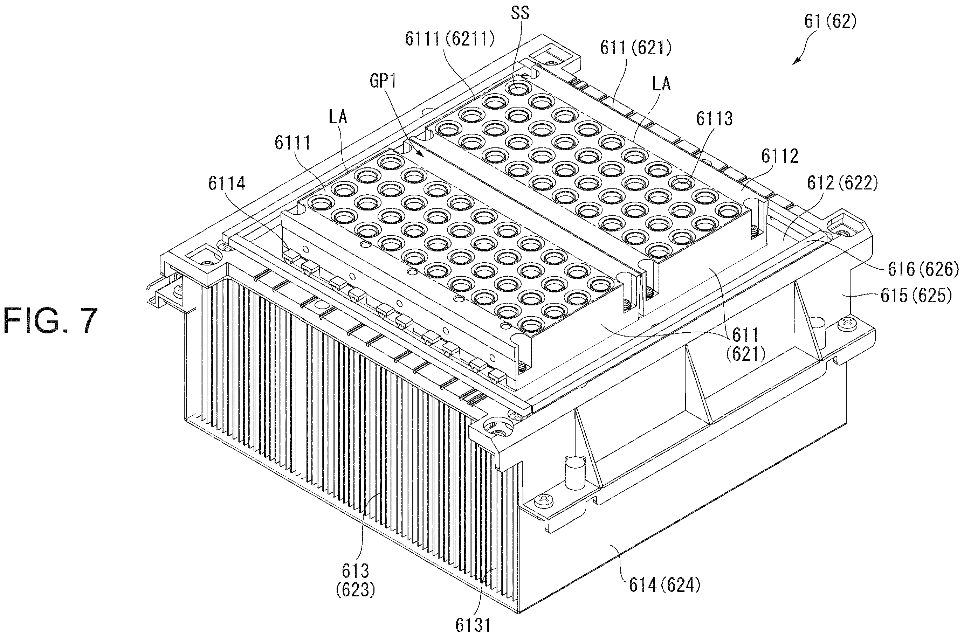

FIG. 7 is a perspective view showing the first light source section 61, as viewed from the light exiting side. In FIG. 7, in view of the easiness of viewing, only a part of the solid-state light sources SS, recess parts 6113, substrates 6114, and fins 6131 is denoted by reference signs. Also, in FIG. 7, the reference signs of the components of the second light source section 62 similar to those of the first light source section 61 are put in brackets.

The first light source section 61 is configured having a light emitting device 611, a heat receiving plate 612, a heat radiation member 613, a cover member 614, a support member 615, and an elastic member 616, as shown in FIG. 7.

### [Configuration of light emitting device]

The light emitting device 611 has two solid-state light source units 6111, each being rectangular as viewed in a plan view. Each of these solid-state light source units 6111 have a support 6112 substantially in the shape of a rectangular parallelepiped on which the plurality of solid-state light sources SS are arranged, and the substrates 6114.

The support 6112 has the plurality of recess parts 6113 opened in a matrix and is configured in such a way that the solid-state light sources SS are arranged inside the respective recess parts 6113. Although not illustrated, the parallelizing lenses provided corresponding to the solid-state light sources SS are also provided in the recess parts 6113.

The plurality of substrates 6114 are situated on the opposite side of the support 6112 from the light exiting side with the solid-state light sources SS. The terminals of the solid-state light sources SS are connected to the substrates 6114. Specifically, each substrate 6114 is arranged along a short-side direction of the solid-state light source units 6111, and the terminals of a plurality of solid-state light sources SS situated in the short-side direction are connected to each substrate 6114. These substrates 6114 are connected via a cable (not illustrated) to a lighting device (not illustrated) which turns on the light source device 5.

These solid-state light source units 6111 are arranged in such a way that the longitudinal directions of the respective supports 6112 are parallel to each other and the short-side directions are aligned with each other. In other words, the two solid-state light source units 6111 are connected in series along the short-side direction. Thus, the light emitting device 611 has a substantially square appearance as viewed from the light exiting side of each solid-state light source SS.

In each support 6112, the plurality of recess parts 6113 where the respective solid-state light sources SS are arranged are not formed in an area on the other support 6112 side. To put it in more detail, the recess parts 6113 are not formed in the parts at both ends in the short-side direction of each support 6112. Thus, the solid-state light sources SS are arranged at positions to the center in the short-side direction of each support 6112. In other words, a substantially rectangular light emission area LA formed by the solid-state light sources SS provided in one solid-state light source unit 6111 is situated at the center in the short-side direction of this solid-state light source unit 6111.

Therefore, when the light emitting device 611 is viewed from the light exiting side with the solid-state light sources SS, a gap GP1 along the longitudinal direction of the solid-state light source units 6111 is situated between the respective light emission areas LA of the two solid-state light source units 6111. The dimension in the +X direction of this gap GP1 is equivalent to the first interval according to the invention.

When the first light source section 61 is installed on the outer casing 65, the respective solid-state light source units 6111 are arranged next to each other along the +X direction. Therefore, the two light emission areas LA are arranged in series along the +X direction via the gap GP1.

### [Configuration of heat receiving plate, heat radiation member, and cover member]

The heat receiving plate 612 is formed of a thermally conductive material such as metal in the shape of a plate and is formed to be larger than the outer shape of the light emitting device 611, as viewed from the light exiting side. The heat generated by the solid-state light sources SS is conducted to this heat receiving plate 612 via the support 6112 and the substrates 6114. This heat is conducted to the heat radiation member 613 connected to the heat receiving plate 612 in a thermally conductive manner.

The heat radiation member 613 is a so-called heat sink and has a configuration in which a plurality of fins 6131 are arranged in parallel. A cooling gas supplied by the cooling device circulates between these fins 6131, thus cooling the heat radiation member 613 and hence the solid-state light sources SS.

The cover member 614 has the function of covering and protecting the heat radiation member 613 and also has the function of a duct to allow the cooling gas to circulate between the fins 6131. This cover member 614 is fixed to the support member 615.

The support member 615 is a member which supports the light emitting device 611, the heat receiving plate 612, the heat radiation member 613, and the cover member 614, and which is fixed to the outer casing 65, described later. This support member 615 is formed to be larger than the components 611 to 614, as viewed from the light exiting side.

The elastic member 616 is formed and arranged of an elastically deformable material in the shape of a frame surrounding the light emitting device 611 in the support member 615. When the first light source section 61 is installed on the outer casing 65, described later, this elastic member 616 abuts against an edge of an opening 6511 in which the light emitting device 611 is arranged, of the outer casing 65, and thus restrains the entry of dust into the outer casing 65.

The second light source section 62 has a configuration similar to that of the first light source section 61. That is, as denoted by reference signs in brackets in FIG. 7, the second light source section 62 has a light emitting device 621, a heat receiving plate 622, a heat radiation member 623, a cover member 624, a support member 625, and an elastic member 626 similar to the light emitting device 611, the heat receiving plate 612, the heat radiation member 613, the cover member 614, the support member 615, and the elastic member 616.

### [Configuration of outer casing]

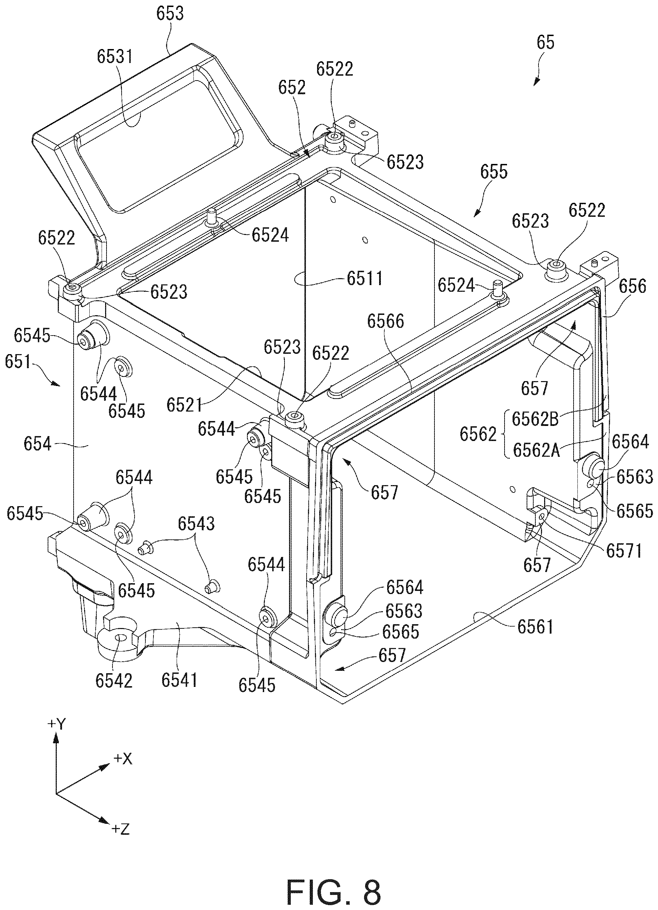

FIG. 8 is a perspective view showing the outer casing 65, as viewed from the light exiting side.

The outer casing 65 is equivalent to the light source casing according to the invention and is a sleeve-like casing made of metal to which the first light source section 61 and the second light source section 62 are fixed, as described above, and to which the inner casing 68 is fixed by the energizing member 69. This outer casing 65 has fixing sections 651, 652, a handle section 653, lateral side sections 654, 655, a connecting section 656, and a fixing section 657, as shown in FIG. 8.

The fixing section 651 is a site which is situated on the -Z direction side in the outer casing 65 and to which the first light source section 61 is fixed in such a way that the direction of emission of excitation light from the solid-state light sources SS follows the +Z direction. This fixing section 651 has a substantially rectangular opening 6511 in which the light emitting device 611 is inserted. In addition, though not illustrated, the fixing section 651 has a screw hole into which a screw (not illustrated) to fix the support member 615 is screwed, and a positioning protrusion inserted in the support member 615. The elastic member 616 abuts against the peripheral edge of the opening 6511.

The fixing section 652 is a site which is situated on the +Y direction side in the outer casing 65 and to which the second light source section 62 is fixed in such a way that the direction of emission of excitation light from the solid-state light sources SS follows the -Y direction. This fixing section 652 has a substantially rectangular opening 6521 in which the light emitting device 621 is inserted. In addition, the fixing section 652 has a boss 6523 where a screw hole 6522 is formed into which a screw (not illustrated) to fix the support member 625 is screwed, and a positioning protrusion 6524 inserted in the support member 625. The elastic member 626 abuts against the peripheral edge of the opening 6521. This restrains the entry of dust into the outer casing 65 from between the fixing section 652 and the second light source section 62.

The handle section 653 protrudes from an end part on the +Y direction side and the - Z direction side in the outer casing 65 further to the +Y direction side and the -Z direction side. This handle section 653 is a site used to grip the light source unit 6. The handle section 653 has an opening 6531 in which a finger of the user is inserted.

The lateral side section 654 is situated on the -X direction side in the outer casing 65. The lateral side section 655 is situated on the +X direction side. These lateral side sections 654, 655 are sites attached to a base member (not illustrated) fixed inside the lower case 2B and are also sites to which the cover members 66, 67 are attached.

Of these, the lateral side section 654 has a protruding part 6541 protruding in the -X direction. A hole part 6542 in which a screw to fix the outer casing 65 to the base member is inserted is formed in the protruding part 6541. The lateral side section 654 also has a plurality of positioning protrusions 6543 protruding in the -X direction, and a plurality of bosses 6544 each of which has a hole part 6545.

The lateral side section 655 has a configuration similar to that of the lateral side section 654.

The connecting section 656 is situated on the +Z direction side in the outer casing 65. This connecting section 656 is a site connected to the accommodation casing 7, described later, and is also a site in which the inner casing 68 is inserted. This connecting section 656 has an opening 6561, and a connection surface 6562 situated at an edge of the opening 6561.

The opening 6561 is formed substantially in a rectangular shape as viewed from the +Z direction side and opens in this +Z direction. This opening 6561 is an opening through which the inner casing 68 is inserted into the outer casing 65, and is also an opening through which the excitation light emitted from the light source sections 61, 62 is emitted outside via the light combining member 63 and the condensing lens 64 held in the inner casing 68.

The connection surface 6562 is a surface connected to the accommodation casing 7. A substantially U-shaped site on the -Y direction side of this connection surface 6562 is a flat connection surface 6562A connected to a first casing 71 forming the accommodation casing 7. A substantially inverted U-shaped site on the +Y direction side is a connection surface 6562B connected to a second casing 72 similarly forming the accommodation casing 7.

Of these, a fixing part 6563 to fix the outer casing 65 and the first casing 71 to each other is provided at both ends in the +X direction of the connection surface 6562A. This fixing part 6563 has a positioning protrusion 6564 inserted in the first casing 71, and an insertion hole 6565 in which a screw (not illustrated) inserted along the +Z direction from the -Z direction side and screwed into the first casing 71 is inserted.

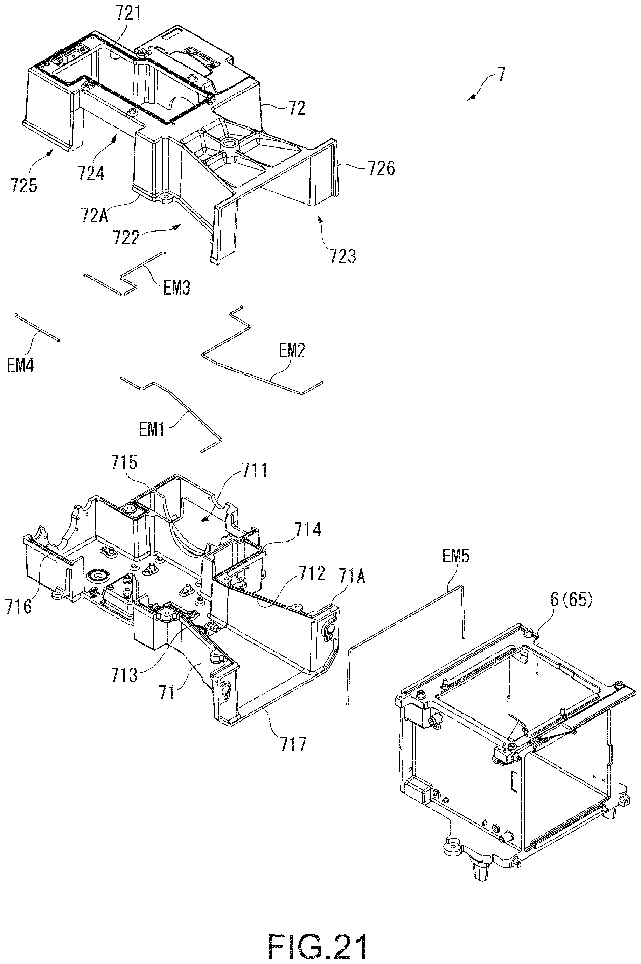

On the connection surface 6562B, a groove part 6566 along this connection surface 6562B is formed. An elastic member EM5 (see FIG. 21) is arranged in this groove part 6566. Of the two ends of this groove part 6566, the end part on the +X direction side opens to the +X direction side, and the end part on the -X direction side opens to the -X direction side. Therefore, a redundant part of the elastic member EM5 can be projected outward at each of the end parts.

The fixing section 657 is a site to fix the inner casing 68 inserted in the opening 6561 and is arranged in each of the four corners of the opening 6561. That is, four fixing sections 657 are provided in total, situated in the corners at both ends in the +X direction on the +Y direction side in the opening 6561 and in the corners at both ends in the +X direction on the -Y direction side. These fixing sections 657 are provided at positions not overlapping the fixing parts 6563. The fixing sections 657 are situated at a step part spaced apart to the -Z direction side by a predetermined dimension from the edge of the opening 6561.

Each of these fixing sections 657 has a screw hole 6571 into which a screw (not illustrated) inserted in the inner casing 68 along the -Z direction is screwed. In addition, though not illustrated, each of the fixing section 657 situated in the corner on the +X direction side on the +Y direction side in the opening 6561 and the fixing section 657 situated in the corner on the -X direction side on the -Y direction side has a positioning protrusion inserted in the inner casing 68.

In this way, the direction of insertion to the outer casing 65 of the screw to fix the inner casing 68 and the direction of insertion to the outer casing 65 of the screw to fix the first casing 71 are opposite to each other.

### [Configuration of cover member]

The cover member 66 is situated on the -X direction side from the outer casing 65, as shown in FIGS. 4 and 5. The cover member 66 is situated on the +Y direction side from the outer casing. The respective cover members are attached to the lateral side sections 654, 655. Of these, the cover member 66 is connected to the cover member 614, 624 of each of the light source sections 61, 62 and thus forms a part of a duct through which the cooling gas to cool the heat radiation member 613, 623 circulates.

### [Configuration of inner casing]

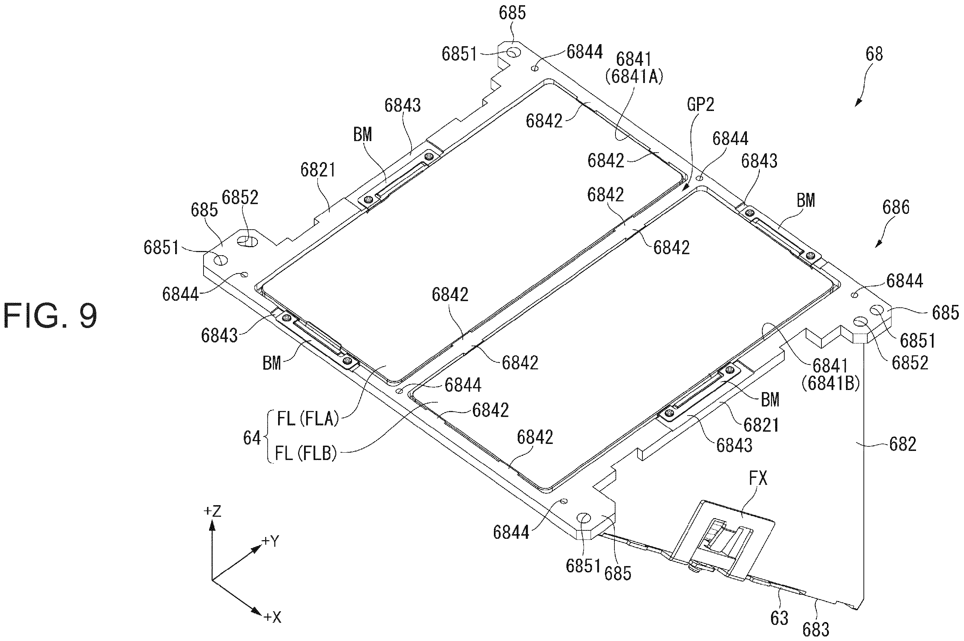

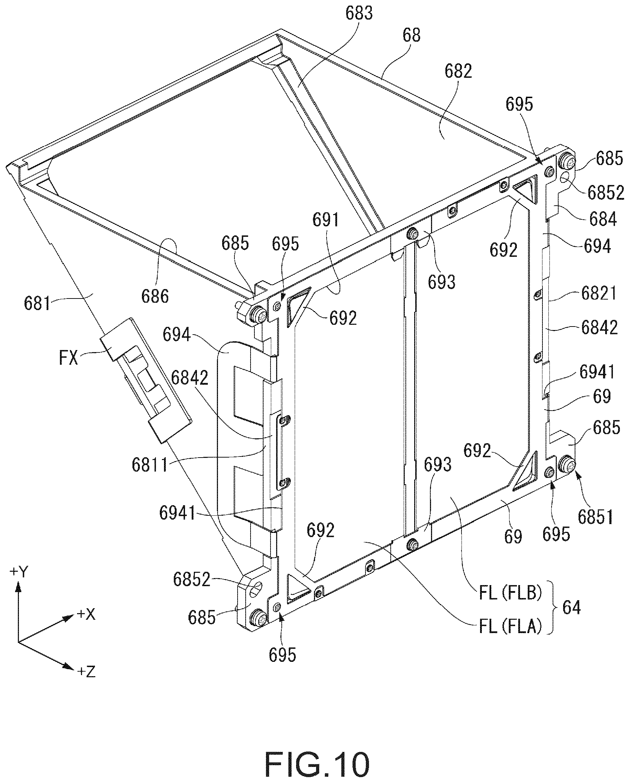

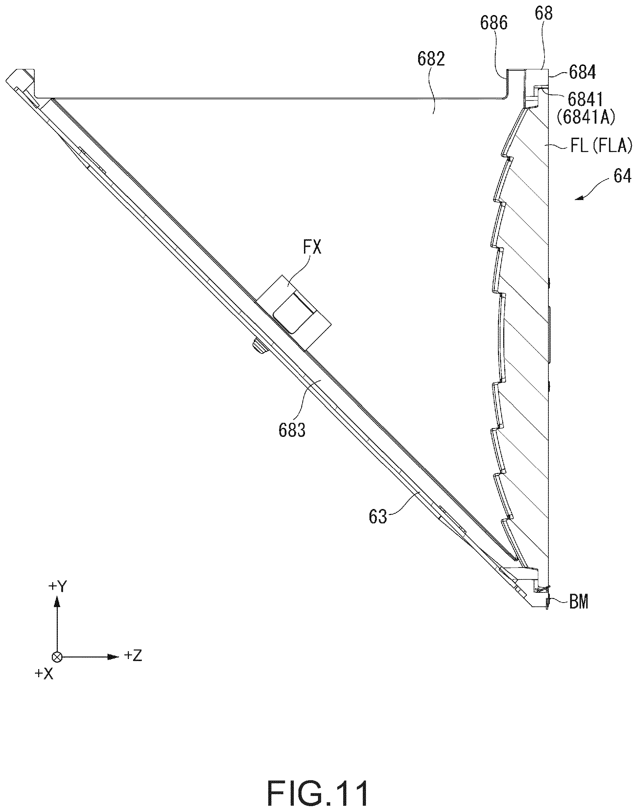

FIG. 9 is a perspective view showing the inner casing 68, as viewed from the light exiting side (+X direction side on the +Z direction side). FIG. 10 is a perspective view showing the inner casing 68 with the energizing member 69 attached, as viewed from the light exiting side (-X direction side on the +Z direction side). FIG. 11 is a view showing a cross section along a YZ plane of the inner casing 68.

The inner casing 68 is equivalent to the holding member according to the invention and is a frame-like casing made of metal which holds the light combining member 63 and the condensing lens 64 as described above and which is inserted in the opening 6561 and accommodated inside the outer casing 65. This inner casing 68 is formed substantially in the shape of a right-angled isosceles triangular prism along the +X direction, as shown in FIGS. 9 to 11.

Such an inner casing 68 has lateral side sections 681, 682 substantially in the shape of right-angled isosceles triangles along a YZ plane and opposite each other, a holding section 683 intersecting each of an XY plane and an XZ plane at an angle of 45 degrees and connecting the lateral side sections 681, 682, a holding section 684 substantially parallel to the XY plane and connecting the lateral side sections 681, 682, and a fixing section 685. In addition, the inner casing 68 has an opening 686 having its edges formed by these components and opening to the +Y direction side.

The lateral side section 681 situated on the -X direction side has, at a site on the +Z direction side, a rising part 6811 rising from the lateral side section 681. The lateral side section 682 situated on the +X direction side has, at a site on the +Z direction side, a rising part 6821 rising from the lateral side section 682. These rising parts 6811, 6821 are inserted in openings 6941 of engaging sections 694 provided on the energizing member 69, described later, and thus contribute to the fixation of the energizing member 69 to the inner casing 68.

The holding section 683 holds the light combining member 63. This light combining member 63 is fixed to the holding section 683 by a fixture FX. A part of the fixture FX is situated on the lateral side sections 681, 682.

The holding section 684 is a site which is situated on the +Z direction side from the holding section 683 and which holds the condensing lens 64 and to which the energizing member 69 is attached. This holding section 684 has two openings 6841 (6841A, 6841B) in which two lenses FL (FLA, FLB) forming the condensing lens 64 are fitted, a protruding part 6842 formed on the edge of each opening 6841, a recessed part 6843 where an energizing member BM is arranged, and a plurality of screw holes 6844 into which a screw to fix the energizing member 69 is screwed.

Of these, as the plurality of screw holes 6844, six screw holes in total are formed near both ends and at the center in the +X direction, at both ends in the +Y direction of the holding section 684.

Each of the two openings 6841 is formed in a rectangular shape corresponding to the shape of the lens FL. A gap GP2 is provided between the two openings 6841 in the +X direction. That is, if the lens FLA is arranged in the opening 6841A situated on the -X direction side, of these openings 6841, and the lens FLB is arranged in the opening 6841B situated on the +X direction side, the gap GP2 exists between these lenses FLA, FLB. The dimension in the +X direction of this gap GP2 is equivalent to the second interval according to the invention.

On the edge on the +X direction side and the edge on the +Y direction side, of the edges of the openings 6841A, the protruding parts 6842 protruding toward the inner side of the opening 6841A are formed, two each on each edge. Similarly, on the edge on the -X direction side and the edge on the -Y direction side, of the edges of the openings 6841B, the protruding parts 6842 protruding toward the inner side of the opening 6841B are formed, two each on each edge.

The recessed part 6843 is formed on an end surface on the +Z direction side connected to the edge opposite the protruding parts 6842, of the edges of the opening 6841A, as shown in FIG. 9. In other words, the energizing member BM arranged in the recessed part 6843 is arranged in the recessed parts 6843 formed corresponding substantially to the center of the edge on the -X direction side and substantially to the center of the edge on the -Y direction side, of the edges of the opening 6841A with the lens FLA fitted therein, and also arranged in the recessed parts 6843 formed corresponding substantially to the center of the edge on the +X direction side and substantially to the center of the edge on the +Y direction side, of the edges of the opening 6841B with the lens FLB fitted therein.

The two energizing members BM provided on the edges of the opening 6841A collaborate to energize the lens FLA to the +Y direction side on the +X direction side and thus cause the lens FLA to abut against the protruding parts 6842 formed on the edge of the opening 6841A. Meanwhile, the two energizing members BM provided on the edges of the opening 6841B collaborate to energize the lens FLB to the -Y direction side on the -X direction side and thus cause the lens FLB to abut against the protruding parts 6842 formed on the edge of the opening 6841B.

The lenses FLA, FLB are the same lenses. The end surface of each of the lenses FLA, FLB opposite to the end surface against which the energizing members BM abut is a reference surface. Since the lens FLA and the lens FLB are arranged to form bilateral symmetry, the positions of the energizing members BM and the positions of the protruding parts 6842 are symmetrical between the opening 6841A and the opening 6841B.

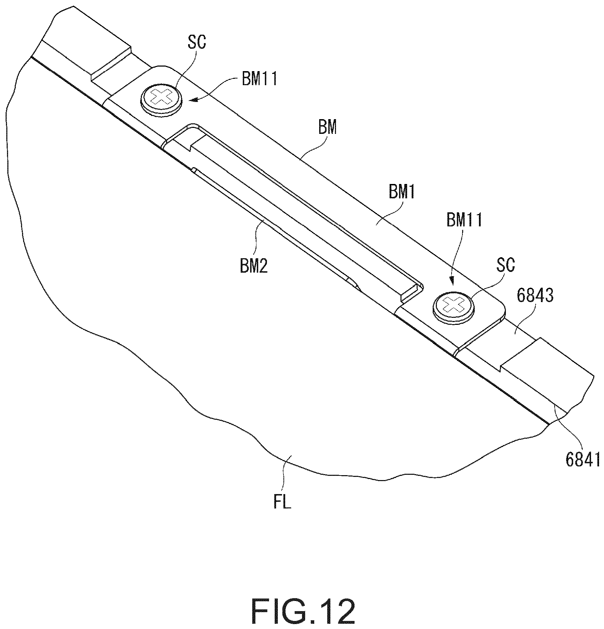

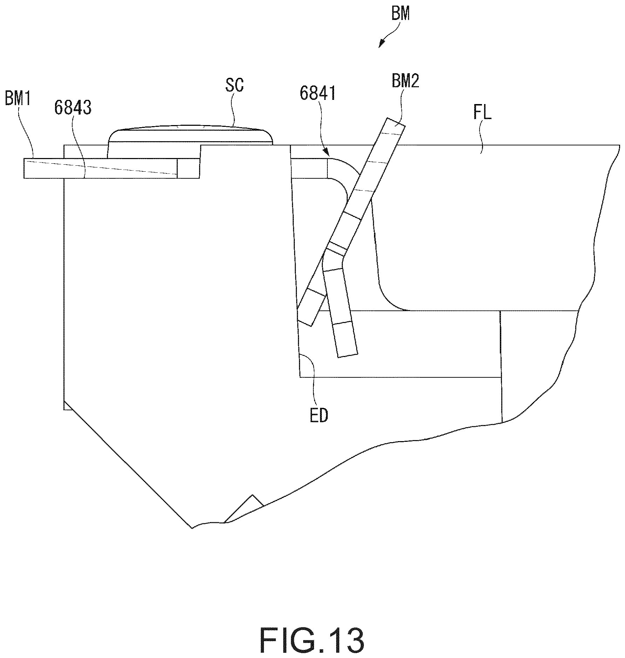

FIGS. 12 and 13 are a perspective view and a cross-sectional view showing the energizing member BM.

The energizing member BM is a leaf spring formed by bending a sheet metal, as shown in FIG. 12. This energizing member BM has a fixed part BM1 formed substantially in a U-shape, and an action part BM2 extending from the fixed part BM1, situated inside the opening 6841, and causing an energizing force to act on the lens FL.

The fixed part BM1 has two hole parts BM11. Screws SC inserted in the respective hole parts BM11 are screwed into screw holes (not illustrated) in the recessed part 6843, thus fixing the energizing member BM.

The action part BM2 is inserted between an edge ED where the energizing member BM is arranged in the opening 6841 (edge ED along the direction of depth) and the lens FL, as shown in FIG. 13. This action part BM2 is tilted in a direction such that the action part BM2 approaches the edge ED as it goes in the direction of depth of the opening 6841. A site on one end side of the action part BM2 is in contact with the edge ED, and a site on the other end side abuts against the lens FL. A spring force generated at the action part BM2 acts on the lens FL, thus causing an energizing force to act on the lens FL into a direction away from the edge ED. By such a energizing member BM, the lens FLA is pushed to one side toward the corner on the +Y direction side on the +X direction side in the opening 6841A, and the lens FLB is pushed to one side toward the corner on the -Y direction side on the -X direction side in the opening 6841B.

The fixing section 685 extends outward from the four corners of the holding section 684, as shown in FIGS. 9 to 11. These four fixing sections 685 are sites to be fixed to the fixing section 657 when the inner casing 68 is arranged inside the outer casing 65.

Each of these fixing sections 685 has a hole part 6851 in which a screw to be screwed into the screw hole 6571 is inserted from the +X direction side, as shown in FIG. 9. In addition, each of the fixing section 685 situated on the +X direction side and the +Y direction side, and the fixing section 685 situated on the -X direction side and the -Y direction side, has a hole part 6852 in which the positioning protrusion projected on the fixing section 657 is inserted.

### [Configuration of energizing member]

The energizing member 69 is a leaf spring which presses and energizes each lens FL toward the inner casing 68. This energizing member 69 is provided to cover the holding section 684 of the inner casing 68 from the +Z direction side, as shown in FIG. 10, and is fixed to the holding section 684 by screws screwed into the screw holes 6844. Such an energizing member 69 has one opening 691, four abutting sections 692, two holding pieces 693, the two engaging sections 694, and four hole parts 695.

The opening 691 is a substantially rectangular opening which exposes each of the lenses FLA, FLB and through which excitation light passing through these lenses FLA, FLB passes.

The four abutting sections 692 are situated in the respective corners of the opening 691, abut against corners of the lenses FLA, FLB, and energize the lenses FLA, FLB toward the inner casing 68.

The two holding pieces 693 are fixed at the edges on the +Y direction side and on the -Y direction side in the opening 691, extending over the lenses FLA, FLB. These holding pieces 693 abut against the corners opposite to the corners of the lenses FLA, FLB against which the abutting sections 692 abut. The holding pieces 693 thus energize the lenses FLA, FLB toward the inner casing 68.

The two engaging sections 694 are respectively an end part on the +X direction side and an end part on the -X direction side of the energizing member 69, and are situated at center sites in the +Y direction and extend respectively to the -Z direction side from the center sites. These engaging sections 694 have the openings 6941 in which the rising parts 6811, 6821 are inserted. These engaging sections 694 abut against the lateral side sections 681, 682 and thus hold the inner casing 68 between the engaging sections 694, thus temporarily fixing the energizing member 69 to the inner casing 68.

The four hole parts 695 are formed corresponding to the screw holes 6844 formed in the corners of the holding section 684, of the six screw holes 6844. Screws to fix the energizing member 69 to the inner casing 68 are inserted into these hole parts 695.

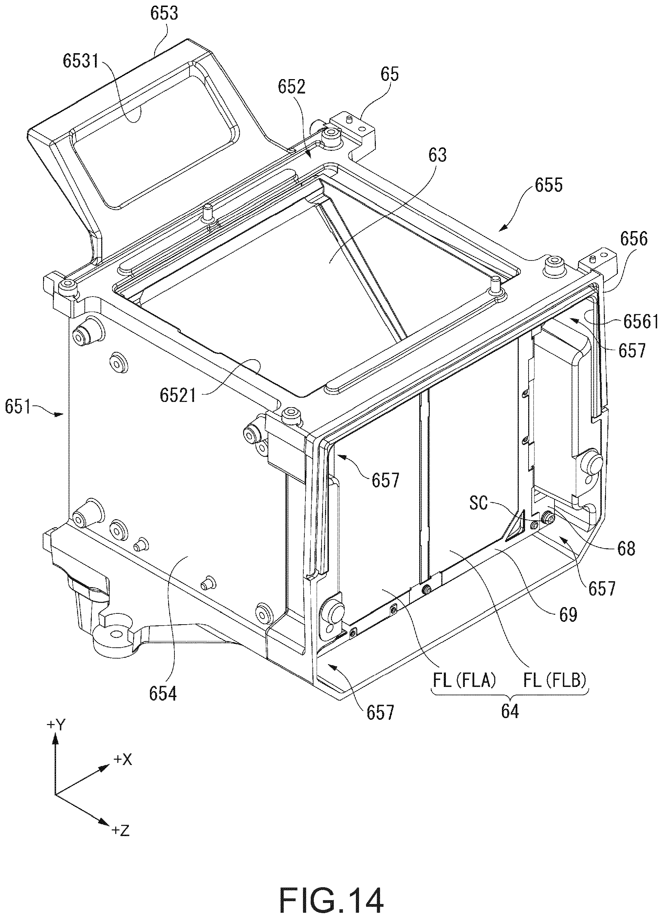

FIG. 14 is a perspective view showing the outer casing 65 in which the inner casing 68 with the energizing member 69 attached is fixed, as viewed from the light exiting side.

In this way, the inner casing 68 supporting the light combining member 63 and the condensing lens 64 (FLA, FLB) and having the energizing member 69 attached is inserted in the opening 6561 of the outer casing 65, as shown in FIG. 14, and is fixed by the screws SC screwed into the fixing sections 657 situated inside the opening 6561, as described above. Then, the first light source section 61 and the second light source section 62 are fixed to the fixing sections 651, 652 of the outer casing 65, respectively.

This enables the light combining member 63 and the condensing lens 64 to be arranged at proper positions on the excitation light emitted from the first light source section 61 and the second light source section 62, and enables improvement in the placement accuracy of the light combining member 63 and the condensing lens 64.

### [Configuration of light combining member]

FIG. 15 is a view showing the configuration of the light combining member 63 and is also a view showing the positional relation between the transmission sections 631 and the reflection sections 632 in the light combining member 63 and the solid-state light sources SS provided on the first light source section 61 and the second light source section 62. In other words, FIG. 15 is a view showing the light combining member 63 and the condensing lens 64, as viewed from the +Y direction side. In FIG. 15, the solid-state light sources SS provided on the second light source section 62 are indicated by dashed lines.

The light combining member 63 is to combine the excitation light emitted from the first light source section 61 and the excitation light emitted from the second light source section 62 and guide the combined excitation light to each of the lenses FLA, FLB of the condensing lens 64, as described above. This light combining member 63 has the transmission sections 631 transmitting the excitation light emitted from the first light source section 61, and the reflection sections 632 reflecting the excitation light emitted from the second light source section 62, and has a configuration in which these transmission sections 631 and reflection sections 632 are formed alternately along the +X direction on a light-transmissive substrate PL, as shown in FIG. 15.

Each transmission section 631 is arranged corresponding to each column of the solid-state light sources SS provided in ten rows by eight columns situated in the two light emission areas LA of the first light source section 61.

Each reflection section 632 is arranged corresponding to each column of the solid-state light sources SS provided ten rows by eight columns situated in the two light emission areas LA of the second light source section 62.

That is, on the light-transmissive substrate PL, eight reflection sections 632 are formed and the transmission sections 631 are formed in the areas other than the reflection sections 632.

The row direction in the first light source section 61 is a direction along the +X direction, and the column direction is a direction along the +Y direction. Meanwhile, the row direction in the second light source section 62 is a direction along the +Z direction, and the column direction is a direction along the +X direction.

In this way, in the light combining member 63, the sites on which the excitation light emitted from the solid-state light sources SS arranged in the respective columns in the first light source section 61 becomes incident, and the sites on which the excitation light emitted from the solid-state light sources SS arranged in the respective columns in the second light source section 62 becomes incident, do not coincide with each other. To put it in more detail, the former is shifted to the -X direction side from the latter. The sites on which the excitation light emitted from the solid-state light sources SS arranged in one column in the first light source section 61 becomes incident are situated between the sites on which the excitation light emitted from the solid-state light sources SS arranged in two neighboring columns in the second light source section 62 becomes incident.

Then, the respective light source sections 61, 62 are arranged and the transmission sections 631 and the reflection sections 632 are arranged in such a way that all the excitation light emitted from the first light source section 61 becomes incident on the transmission sections 631 and that all the excitation light emitted from the second light source section 62 becomes incident on the reflection sections 632.

Such a light combining member 63 have two areas R1, R2 where the transmission sections 631 and the reflection sections 632 are arranged at an equal interval in the +X direction (areas R1, R2 indicated by chain double-dashed lines). Of these, on the area R1 situated on the -X direction side, the excitation light emitted from the light emission area LA on the -X direction side in the first light source section 61 (light emission area LA indicated by dashed lines) becomes incident and the excitation light emitted from the light emission area LA on the -X direction side in the second light source section 62 (light emission area LA indicated by chain double-dashed lines) becomes incident. Similarly, on the area R2 situated on the +X direction side, the excitation light emitted from the light emission area LA on the +X direction side in the first light source section 61 (light emission area LA indicated by dashed lines) becomes incident and the excitation light emitted from the light emission area LA on the +X direction side in the second light source section 62 (light emission area LA indicated by chain double-dashed lines) becomes incident.

Such a light combining member 63 causes the excitation light emitted from each light emission area LA on the -X direction side in the first light source section 61 and the second light source section 62 to become incident on the lens FLA of the condensing lens 64 via the area R1. Similarly, the light combining member 63 causes the excitation light emitted from each light emission area LA on the +X direction side in the first light source section 61 and the second light source section 62 to become incident on the lens FLB of the condensing lens 64 via the area R2.

### [Configuration of condensing lens]

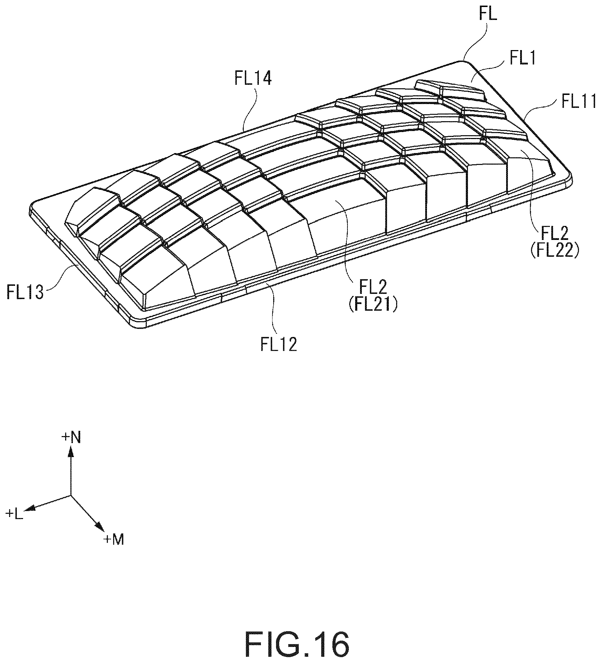

FIG. 16 is a perspective view showing the lens FL forming the condensing lens 64.

The condensing lens 64 is an optical component which condenses the excitation light incident from the first light source section 61 and the second light source section 62 via the light combining member 63 and causes the condensed excitation light to become incident on the parallelizing lens 51, as described above. This condensing lens 64 is formed of two of such lenses FL. This lens FL is a substantially rectangular Fresnel lens and aspheric lens.

In the description below, one of the longitudinal directions of the lens FL is defined as a +L direction, and one of the short-side directions of the lens FL is defined as a +M direction. One direction orthogonal to these +L direction and +M direction is defined as a +N direction. Also, though not illustrated, the opposite direction of the +L direction is defined as a -L direction. A -M direction and a -N direction are similarly defined.

The lens FL has a substantially rectangular light-transmissive substrate FL1 and a plurality of small lenses FL2 projected in the +N direction on the light-transmissive substrate FL1. These small lenses FL2 form one light emission area LA in the first light source section 61 and the second light source section 62 and are provided corresponding to the solid-state light sources SS arranged in a matrix. Specifically, the lens FL has 36 small lenses FL2 in total, arranged in nine rows along the +M direction by four columns along the +L direction.

When such a lens FL is viewed from the +N direction side, small lenses FL22 other than small lenses FL21 in one row situated at the center in the +L direction (four small lenses FL21), of the small lenses FL2, have substantially the same shape and area. Also, each of the small lenses FL21 in the one row has substantially the same shape and area as two small lenses FL22 connected together in the +L direction.

Each small lens FL2 has a curvature which increases as it goes away from the center in the +L direction at the end on the +M direction side. That is, in the lens FL, the small lens FL21 situated at the center in the +L direction at the end on the +M direction side has the smallest curvature, and the small lenses FL22 situated on the +L direction side and the -L direction side on the -M direction side have the largest curvature.

The lens FL having such small lenses FL2 is arranged inside each opening 6841 of the inner casing 68. At this time, in the opening 6841A situated on the -X direction side as viewed from the +Z direction side, the lens FL is arranged in such a way that the +L direction coincides with the +Y direction, the +M direction coincides with the +X direction, and the +N direction coincides with the -Z direction. Meanwhile, in the opening 6841B situated on the +X direction side as viewed from the +Z direction side, the lens FL is arranged in such a way that the +L direction coincides with the -Y direction, the +M direction coincides with the -X direction, and the +N direction coincides with the -Z direction.

In the lens FL, the reference surface is an end surface FL11 on the -L direction side and an end surface FL12 on the +M direction side of the light-transmissive substrate FL1. The end surface against which the energizing member BM abuts is an end surface FL13 on the +L direction side and an end surface FL14 on the -M direction side of the light-transmissive substrate FL1.

### [Optical path of excitation light incident on condensing lens 64]

As shown in FIG. 15, on the lens FLA situated on the -X direction side when the condensing lens 64 is held on the inner casing 68, of the two lenses FL forming the condensing lens 64, each of the light emitted from the light emission area LA situated on the -X direction side in the first light source section 61 and the light emission area LA situated on the -X direction side in the second light source section 62 becomes incident via the area R2 in the light combining member 63.

Also, on the lens FLB situated on the +X direction side when the condensing lens 64 is held on the inner casing 68, each of the light emitted from the light emission area LA situated on the +X direction side in the first light source section 61 and the light emission area LA situated on the +X direction side in the second light source section 62 becomes incident via the area R2 in the light combining member 63.

Here, in the lenses FLA, FLB, the excitation light emitted from the solid-state light sources SS in one column along the +Y direction in the first light source section 61 and the excitation light emitted from the solid-state light sources SS in one column along the +Z direction in the second light source section 62 become incident on the lens array in one column along the +Y direction (+L direction).

FIG. 17 is a cross-sectional view showing the first light source section 61, the second light source section 62, the light combining member 63, and the condensing lens 64, taken along a YZ plane. To put it in more detail, FIG. 17 is a cross-sectional view taken along a YZ plane in the light emission area LA on the +X direction side in the first light source section 61 and the second light source section 62. In other words, FIG. 17 is a view showing the optical paths of the excitation light emitted from the respective solid-state light sources SS in one column along the +Y direction in the first light source section 61 and the respective solid-state light sources SS in one column along the +Z direction in the second light source section 62 and becoming incident on the small lenses FL2 in one column along the +Y direction in the lens FL.

In the lenses FLA, FLB, on each of the small lenses FL22 otherthan the small lenses FL21 in the one column along the +Y direction (+L direction) situated at the center, the excitation light emitted from each of the solid-state light sources SS in one column emitting excitation light to become incident on the small lenses FL2 in the corresponding one column in the first light source section 61, and the excitation light emitted from each of the solid-state light sources SS in one column emitting excitation light to become incident on the small lenses FL2 in the corresponding one column in the second light source section 62, become incident, as shown in FIG. 17.

For example, the excitation light emitted from one solid-state light source SS11 situated furthest to the +Y direction side, of the solid-state light sources SS in the one column in the first light source section 61, becomes incident on a small lens FL221 situated furthest to the +Y direction side, of the small lenses FL2 in the one column. Similarly, the excitation light emitted from one solid-state light source SS21 situated furthest to the -Z direction side, of the solid-state light sources SS in the one column in the second light source section 62, becomes incident on the small lens FL221 situated furthest to the +Y direction side, of the small lenses FL2 in the one column.

Also, the excitation light emitted from one solid-state light source SS12 situated furthest to the -Y direction side, of the solid-state light sources SS in the one column in the first light source section 61, becomes incident on a small lens FL222 situated furthest to the -Y direction side, of the small lenses FL2 in the one column. Similarly, the excitation light emitted from one solid-state light source SS22 situated furthest to the +Z direction side, of the solid-state light sources SS in the one column in the second light source section 62, becomes incident on the small lens FL222 situated furthest to the -Y direction side, of the small lenses FL2 in the one column.

Meanwhile, on the small lenses FL21 in the one column, the excitation light emitted from the two solid-state light sources SS situated at the center of the solid-state light sources SS in one column emitting excitation light to become incident on the small lenses FL2 in the corresponding one column in the first light source section 61, and the excitation light emitted from the two solid-state light sources SS situated at the center of the solid-state light sources SS in one column emitting excitation light to become incident on the small lenses FL2 in the corresponding one column in the second light source section 62, become incident.

Specifically, the excitation light emitted from two solid-state light sources SS13, SS14 situated at the center in the +Y direction, of the solid-state light sources SS in the one column in the first light source section 61, becomes incident on the small lens FL21 situated at the center in the +Y direction, of the small lenses FL2 in the one column. Similarly, the excitation light emitted from two solid-state light sources SS23, SS24 situated at the center in the +Z direction, of the solid-state light sources SS in the one column in the second light source section 62, becomes incident on the small lens FL21 situated at the center in the +Y direction, of the small lenses FL2 in the one column.

In this way, the solid-state light sources SS emitting excitation light to become incident on the small lenses FL22, of the plurality of solid-state light sources SS provided in the first light source section 61, correspond to these small lenses FL 22 one-to-one. Also, the solid-state light sources SS emitting excitation light to become incident on the small lenses FL22, of the plurality of solid-state light sources SS provided in the second light source section 61, correspond to these small lenses FL 22 one-to-one. That is, in each of the first light source section 61 and the second light source section 62, there is one solid-state light source SS emitting excitation light to become incident on one small lens FL22.

The curvature and direction of each small lens FL2 are set according to the position of the small lens FL2. Therefore, each small lens FL2 enables the excitation light incident from each of the light source sections 61, 62 to be condensed more easily at a predetermined position on the first illumination optical axis Ax1.

The excitation light from the two solid-state light sources SS situated at the center in the +Y direction, of the plurality of solid-state light sources SS provided in the first light source section 61, and the excitation light from the two solid-state light sources SS situated at the center in the +Z direction, of the plurality of solid-state light sources SS provided in the second light source section 62, become incident on the small lens FL21 situated at the center in the +Y direction. Since these excitation lights become incident on the small lens FL21 at the position close to the first illumination optical axis Ax1, substantially parallel to the first illumination optical axis Ax1, there is no need to greatly adjust the exit angle of the excitation lights from the lens FL. Thus, since the exit angle of the excitation lights emitted from these four solid-state light sources SS is adjustable by one small lens FL2, the exit angle of the excitation lights is adjusted by the one small lens FL21, to simplify the configuration of the lens FL.

### [Configuration of light source device casing]

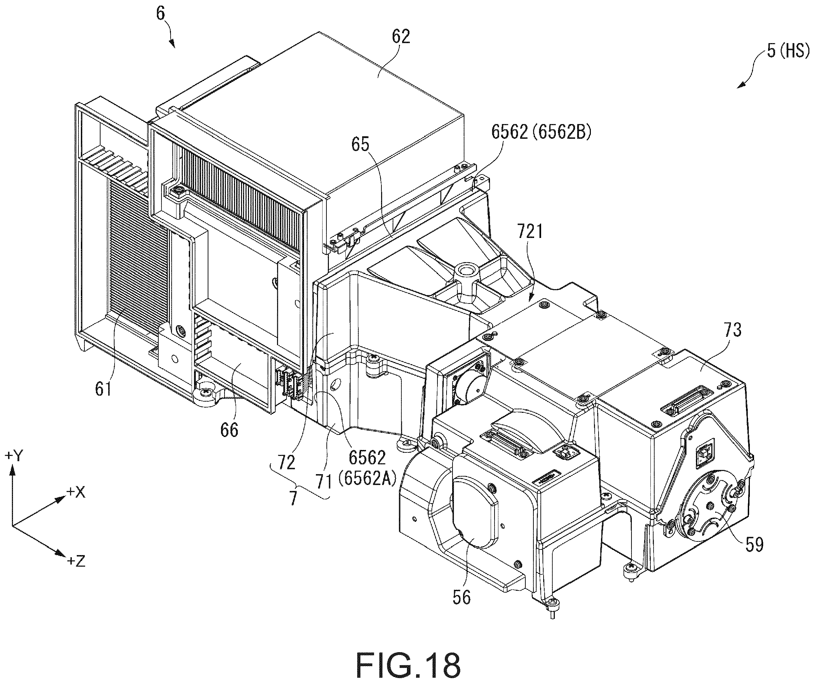

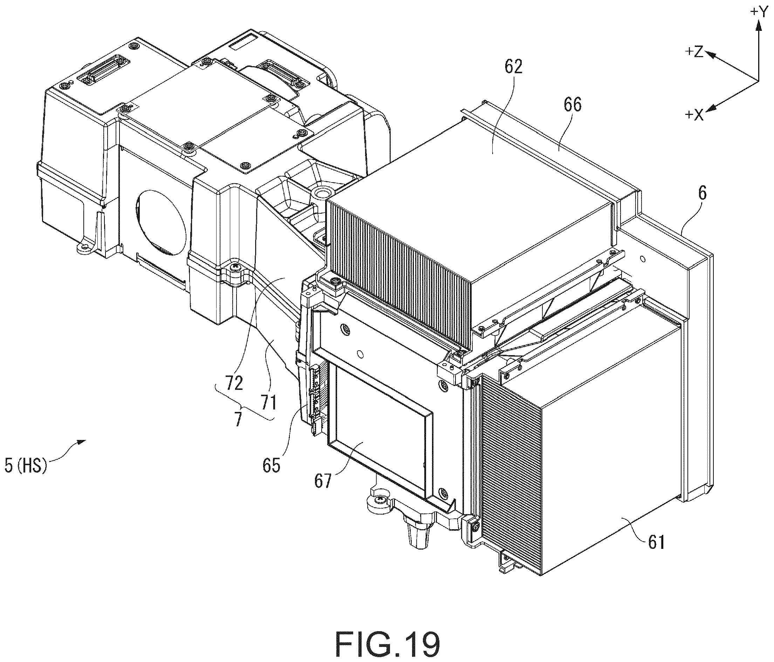

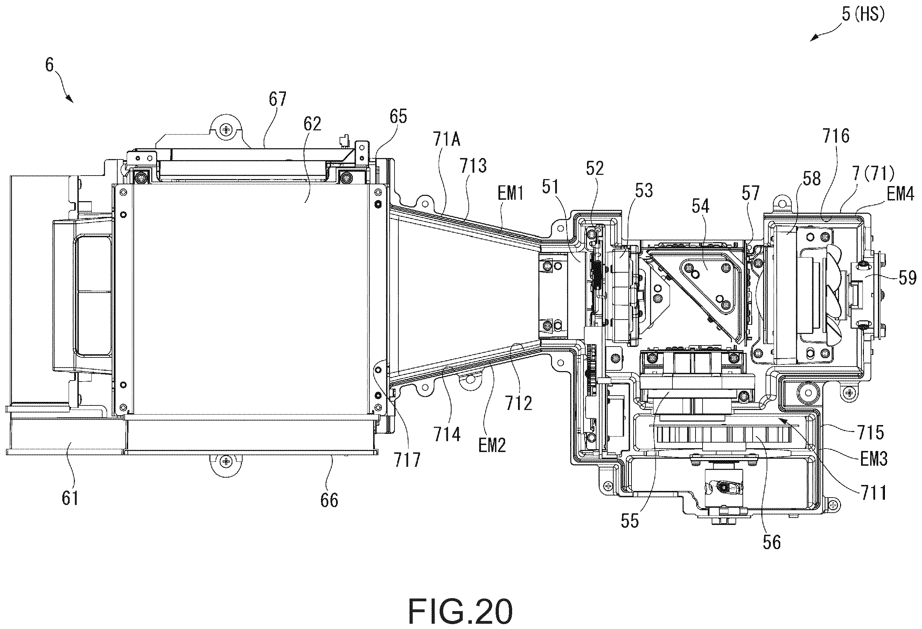

FIG. 18 is a perspective view showing the light source device 5 as viewed from the +Z direction side. FIG. 19 is a perspective view showing the light source device 5 as viewed from the -Z direction side. FIG. 20 is a plan view showing the light source device 5 with the second casing 72 removed.

The light source device 5 has the light source unit 6 and the optical components 51 to 59 and also has the accommodation casing 7 accommodating these optical components 51 to 59 at predetermined positions on the first illumination optical axis Ax1 and the second illumination optical axis Ax2 set inside, as described above. This accommodation casing 7 is integrated with the light source unit 6, thus forming a light source device casing HS, as shown in FIGS. 18 to 20.

The accommodation casing 7 has the first casing 71, which is situated on the -Y direction side and to which the respective optical components 51 to 59 are fixed, and the second casing 72, which is situated on the +Y direction side and combined with the first face section 71.

FIG. 21 is an exploded perspective view showing the light source device casing HS. That is, FIG. 21 is a perspective view showing the first casing 71 and the second casing 72, and the outer casing 65 of the light source unit 6 connected to the casings 71, 72, as viewed from the +Y direction side on the -Z direction side.

As shown in FIG. 19, the first casing 71 has a placing section 711 where the optical components 51 to 59 are arranged, and an opening 712 opening in the +Y direction to allow the optical components 51 to 59 to be accommodated in the placing section 711.

In addition, as shown in FIGS. 20 to 21, the first casing 71 has groove parts 713 to 716 situated on peripheral edges of the opening 712 on an end surface 71A on the +Y direction side which abuts against the second casing 72, elastic members EM1 to EM4 arranged in the groove parts 713 to 716, and a connection surface 717 which is an end surface on the -Z direction side and connected to the connection surface 6562A.

The groove parts 713 to 716 are formed in the entire area except the sites separated to connect to other members, on the end surface 71A.

The elastic members EM1 to EM4 are arranged in the entire area in the groove direction of the groove parts 713 to 716 (direction in which the groove parts 713 to 716 extend). The elastic members EM1 to EM4 are formed of hollow tubes.

The connection surface 717 is formed substantially in a U-shape corresponding to the shape of the connection surface 6562A. This connection surface 717 is a flat surface. A gap that dust can enter is not formed between the connection surface 717 and the connection surface 6562A at the foot of the connection surface 717 connected to the connection surface 6562A.

The second casing 72 has an outer shape corresponding to the first casing 71, as viewed from the +Y direction, and is combined with the first casing 71 to close the opening 712, as shown in FIGS. 18, 19, and 21. This second casing 72 has an opening 721 opening to the +Y direction side.

This opening 721 is an opening in which a jig for gripping a component that needs position adjustment, of the optical components 51 to 59, is inserted when the second casing 72 is combined with the first casing 71 with the optical components 51 to 59 arranged inside. This opening 721 is closed by a plate-like body 73. In addition, though not illustrated, the second casing 72 has an opening in which a jig for fixing a component adjusted in position is inserted. This opening is sealed by a sealing member.

Moreover, the second casing 72 has an end surface 72A which abuts against the end surface 71A of the first casing 71, as shown in FIG. 21. The end surface 72A has protruding parts 722 to 725 protruding in the -Y direction. These protruding parts 722 to 725 are inserted in the groove parts 713 to 716 and press and deform the elastic members EM1 to EM4 when the first casing 71 and the second casing 72 are combined together. This restrains formation of a gap between the first casing 71 and the second casing 72 through which air containing dust or the like flows in. That is, the protruding parts 722 to 725 are equivalent to the pressing part according to the invention.

Also, the second casing 72 has a connection surface 726 which is an end surface on the -Z direction side and connected to the connection surface 6562B. This connection surface 726 presses the elastic member EM5 in the groove part 6566 (see FIG. 8) formed on the connection surface 6562B. This restrains formation of a gap between the connection surface 726 and the connection surface 6562B through which air containing dust or the like flows in.

When the light source device casing HS is assembled, first, the first casing 71 and the outer casing 65 are fixed together with screws. At this time, since the connection surfaces 717, 6562A connected to each other have a relatively small area, these connection surfaces 717, 6562A each can be formed flatly. Thus, when these connection surface 717, 6562A are connected to each other, the formation of a gap through which dust enters the light source device casing HS is restrained, as described above.

Meanwhile, when the second casing 72 is combined with the first casing 71 combined with the outer casing 65, and the connection surface 726 of the second casing 72 is connected to the connection surface 6562B, a gap is generated between the connection surfaces 726, 6562B even if these connection surfaces 726, 6562B are formed flatly.

To cope with this, the elastic member EM5 is arranged between the connection surfaces 726, 6562B and the elastic member EM5 is sandwiched and elastically deformed between the connection surfaces 726, 6562B. The formation of the gap is thus restrained.

That is, the spaces between the first light source section 61 and the second light source section 62, and the outer casing 65, are sealed by the elastic member 616, 626. Also, the outer casing 65, the first casing 71, and the second casing 72 are connected without any gap, with the elastic members EM1 to EM5 and the sealing member. Moreover, the casing accommodating the homogenization device 9 and the accommodation casing 7 are connected together with a sealing member, not illustrated. Thus, the light source device casing HS is a tightly closed casing where entry of dust-containing air is restrained.

### [Effects of embodiment]

The projector 1 according to the embodiment described above has the following effects.

In the light source unit 6, the inner casing 68 holding the light combining member 63 is fixed inside the outer casing 65 with the first light source section 61 and the second light source section 62 attached from outside. With this configuration, properly placing the inner casing 68 and the outer casing 65 can make it easier to arrange the light combining member 63 at a proper position on the optical path of the light emitted in two different directions from the first light source section 61 and the second light source section 62. Thus, the placement accuracy of the light combining member 63 can be improved and the light emitted from the respective light source sections 61, 62 can be properly combined together.

The inner casing 68 accommodated and fixed inside the outer casing 65 holds not only the light combining member 63 but also the condensing lens 64. With this configuration, since the inner casing 68 is fixed inside the outer casing 65, the condensing lens 64 can be arranged accurately. Thus, the placement accuracy of the condensing lens 64 can be improved.

The energizing member 69 energizing the condensing lens 64 held by the inner casing 68 toward the inner casing 68 is attached to the inner casing 68. Also, the inner casing 68 is inserted and fixed inside the outer casing 65 in the state where the energizing member 69 is attached to the inner casing 68. This enables the fixation of the inner casing 68 to the outer casing 65 in the state where the movement of the condensing lens 64 is regulated by the energizing member 69. Thus, the placement accuracy of the condensing lens 64 can be improved further.

The optical components 51 to 59 are arranged inside the accommodation casing 7 having the first casing 71 and the second casing 72. In this first casing 71, the opening 712, in which the optical components 51 to 59 are inserted, is closed by the second casing 72 combined with the first casing 71. Also, the accommodation casing 7 is connected to the outer casing 56. Thus, the light emitted from the first light source section 61 and the second light source section 62 and combined together can become properly incident on the optical components 51 to 59. This can ensure that an amount of light incident on the optical components 51 to 59 is secured.

Also, since the first casing 71 has the opening 712, the placement of the optical components in the first casing 71 can be carried out more easily. Moreover, since the opening 712 is closed by the second casing 72, the entry of dust into the first casing 71 and hence the accommodation casing 7 can be restrained.

The elastic members EM1 to EM4 are arranged between the first casing 71 and the second casing 72. Specifically, on the end surface 71A facing the second casing 72 of the first casing 71, the groove parts 713 to 716 are formed, in which the elastic members EM1 to EM4 are arranged. Also, the elastic members EM1 to EM4 are pressed by the second casing 72 when the second casing 72 is combined with the first casing 71. Thus, a gap through which dust enters the accommodation casing 7 can be restrained from being formed between the first casing 71 and the second casing 72 by the elastic members EM1 to EM4. This can enhance the sealing inside the accommodation casing 7.

The elastic members EM1 to EM4 are formed of elastically deformable tubes. Therefore, as the elastic members EM1 to EM4 are pressed and elastically deformed by the protruding parts 722 to 725 of the second casing 72, the gap can be securely restrained from being formed between the inner surfaces of the groove parts 713 to 716 and the protruding parts 722 to 725. Thus, the sealing inside the accommodation casing 7 can be enhanced further.

In the light source unit 6, the lenses FL as the aspheric lenses forming the condensing lens 64 are arranged, corresponding to each of the plurality of light emission areas LA provided in the first light source section 61 and the second light source section 62. That is, the light emitted from one light emission area LA of one light source section, of the first light source section 61 and the second light source section 62, becomes incident on and is condensed by one lens FL. This can reduce the thickness dimension of the condensing lens 64 configured with a plurality of lenses FL, compared with the case where a condensing lens corresponding to the entirety of the one light source section, that is, one condensing lens on which all the light emitted from a plurality of light emission areas LA becomes incident, is employed. Thus, a reduction in the weight of the condensing lens 64 and hence the light source device 5 can be achieved. Also, a reduction in the weight of the projector 1 can be achieved.

An increase in the thickness dimension of the condensing lens leads to the problem that the amount of light internally absorbed by the condensing lens increases, causing a reduction in the amount of light emitted from the light source device. In contrast, the foregoing configuration enables a reduction in the thickness dimension of the condensing lens 64. Therefore, the amount of internally absorbed light can be reduced. Thus, the reduction in the amount of light emitted from the light source device 5 can be restrained and the reduction in the luminance of the projected image can be restrained.

The light source unit 6 has the light combining member 63, which combines the light emitted in two different directions from the first light source section 61 and the second light source section 62 and guides the combined light to the condensing lens 64. With this configuration, the light emitted not only from the first light source section 61 but also from the second light source section 62 can be combined together, condensed, and emitted. This can make it easier to increase the amount of light emitted from the light source device 5.

Each of the light source sections 61, 62 has the two solid-state light source units 6111 in which the solid-state light sources SS are arranged in a matrix on the support 6112. In such solid-state light source units 611, the solid-state light sources SS are arranged in the center part in the short-side direction of the support 6112. Therefore, in each of the light source sections 61, 62, the gap GP1 equivalent to the first interval is generated between the light emission area LA in one solid-state light source unit 6111 and the light emission area LA in the other solid-state light source unit 6111.

To cope with this, the lens FLA is arranged corresponding to the light emission area LA on the -X direction side in each of the first light source section 61 and the second light source section 62, and the lens FLB is arranged corresponding to the light emission area LA on the +X direction. With this configuration, arranging the lenses FL corresponding to the respective light emission areas LA can securely reduce the thickness dimension of the condensing lens 64 even if a light source section having a plurality of the solid-state light source units 6111 arrayed in the +X direction is employed. Thus, the foregoing effect can be achieved securely.

On one small lens FL2 of the lens FL made up of a Fresnel lens, the light emitted from the solid-state light source SS corresponding to this one small lens FL2 becomes incident. That is, the excitation light emitted from one solid-state light source SS of the plurality of solid-state light sources SS provided in the first light source section 61 becomes incident on one small lens FL2. Similarly, the excitation light emitted from one solid-state light source SS of the plurality of solid-state light sources SS provided in the second light source section 62 becomes incident on one small lens FL2. With this configuration, adjusting the curvature of each small lens FL2 according to the position of the solid-state light sources SS in the light emission area LA enables the light emitted from each solid-state light source SS to be securely converged at a predetermined position. Thus, the condensation efficiency of the excitation light emitted from each of the light source sections 61, 62 can be increased. This enables the excitation light to securely become incident on the parallelizing lens 51.

The light source device 5 has: the parallelizing lens 51, which together with the condensing lens 64 forms the afocal optical device and which parallelizes the excitation light incident from the condensing lens 64; the wavelength conversion device 56 (wavelength conversion element 561), which converts the wavelength of a part of the excitation light parallelized by the parallelizing lens 51 to emit fluorescence; the diffusion element 59, which diffuses another part of the excitation light; and the light combining device 54, which combines the fluorescence emitted from the wavelength conversion device 56 and the excitation light diffused by the diffusion element 59 and emits the combined light. Thus, the light source device 5 emitting the illumination light WL, which is white light, can be formed. This can increase the versatility of the light source device 5.

### [Modifications of embodiment]

The invention is not limited to the embodiment and includes modifications, improvements and the like within a scope such that the objects of the invention can be achieved.

The inner casing 68 as the holding member accommodated and fixed inside the outer casing 65 as the light source casing is described as being fixed at the fixing section 657 situated in the opening 6561. However, this is not limiting. As the fixing method for the inner casing 68, other fixing methods may be used provided that the inner casing 68 can be accurately fixed to the outer casing 65. The shape of the inner casing 68 is not limited to the foregoing shape, either. Other shapes, for example, without having at least one of the lateral side sections 681, 682, may be employed.

The inner casing 68 is described as holding the two lenses FL forming the condensing lens 64, in addition to the light combining member 63. However, this is not limiting. The condensing lens 64 may be fixed to the outer casing 65 by another member or may be accommodated in the accommodation casing 7.

Also, the condensing lens 64 is described as having the two lenses FL, each made up of a Fresnel lens, which is an aspheric lens.

It is described that the energizing member 69 energizing and fixing the condensing lens 64 (FLA, FLB) toward the inner casing 68 (-Z direction side) is attached to the inner casing 68. However, this is not limiting. The energizing member 69 may be omitted or may be attached to the outer casing 65. The energizing member 69 may also be provided for each lens FL and can be properly changed in shape.

The outer casing 65 is described as being connected to the accommodation casing 7 accommodating the optical components 51 to 59. However, this is not limiting. The outer casing 65 and the accommodation casing 7 may be not connected together and may be spaced apart. Also, while the accommodation casing 7 is made up of the first casing 71 and the second casing 72 combined together, these casings may be integrated. For example, an accommodation casing may be formed in the shape of a sleeve, and optical components may be inserted and arranged in an opening of the accommodation casing. Moreover, the optical components accommodated in the accommodation casing are not limited to the optical components 51 to 59 and may be other optical components. Also, a part of these optical components 51 to 59 may be accommodated.

It is described that the elastic members EM1 to EM4 are arranged between the first casing 71 and the second casing 72, and that the elastic member EM5 is arranged between the second casing 72 and the outer casing 65. However, this is not limiting. At least one of the elastic members EM1 to EM5 may be omitted. Meanwhile, an elastic member may be arranged between the first casing 71 and the outer casing 65. Moreover, these elastic members may be not hollow tubes and may be cushions or the like.

Also, the elastic members EM1 to EM4 are described as being arranged in the groove parts 713 to 716 formed on the peripheral edges of the opening 712 of the first casing 71 and as being pressed by the protruding parts 722 to 725 as pressing parts formed in the second casing 72. However, this is not limiting. The elastic members EM1 to EM4 may be arranged on the end surface 71A without having the groove parts 713 to 716. Moreover, the second casing 72 may have groove parts and elastic members, while the first casing 71 may have protruding parts. The elastic member EM5 and the groove part 6566 where the elastic member EM5 is arranged may be configured similarly.

The light source unit 6 is described as having the first light source section 61 and the second light source section 62. However, this is not limiting. The light source unit 6 may have a configuration having the first light source section 61 and without having the second light source section 62 and the light combining member 63. The light source unit 6 may also have a configuration without having the first light source section 61 and having a reflection member arranged instead of the light combining member 63. Moreover, the direction in which the first light source section 61 emits light and the direction in which the second light source section 62 emits light may be not orthogonal and may simply intersect each other. The light emitted from the light source sections 61, 62 is not limited to excitation light and may be light with other wavelengths.

The first light source section 61 and the second light source section 62 are described as having the light emitting device 611 having the two solid-state light source units 6111 in which the solid-state light sources SS are arranged in ten rows by four columns, with the solid-state light sources SS in ten rows by four columns forming one light emission area. However, this is not limiting. The number and arrangement of the solid-state light sources SS provided in the solid-state light source units 6111 can be properly changed. That is, the number and arrangement of the solid-state light sources SS forming the light emission area LA can be properly changed.

The condensing lens 64 is described as having the two lenses FL, each being a Fresnel lens. It is also described that the excitation light emitted from two solid-state light sources SS of the plurality of solid-state light sources SS provided in the first light source section 61 and the excitation light emitted from two solid-state light sources SS of the plurality of solid-state light sources SS provided in the second light source section 61 become incident on the small lens FL21 of the small lenses FL2 provided in each lens FL. It is also described that the excitation light emitted from one solid-state light source SS of the plurality of solid-state light sources SS provided in the first light source section 61 and the excitation light emitted from one solid-state light source SS of the plurality of solid-state light sources SS provided in the second light source section 61 become incident on the small lenses FL22. However, this is not limiting. The number of solid-state light sources SS emitting excitation light to become incident on each small lens FL2 can be properly changed, provided that the excitation light can be converged at a predetermined position by the small lens FL2.

Also, the light incident surface of each small lens FL2 is described as being formed in a curved shape having a predetermined curvature. However, this is not limiting. The light incident surface may be a slope tilted from the direction of incidence of excitation light. That is, when each lens forming the condensing lens is viewed along a direction orthogonal to the direction of incidence of excitation light, the lens may have a plurality of small lenses that look serrate.

The light source device 5 is described as having the parallelizing lens 51, the wavelength conversion device 56, the diffusion element 59, and the light combining device 54, in addition to the light source unit 6. However, this is not limiting. Provided that the light source device 5 has at least the light source unit 6, the other components may have any configuration.

The projector 1 is described as having the three light modulation devices 44 (44R, 44G, 44B), each having a liquid crystal panel. However, this is not limiting. The invention can also be applied to a projector having two or fewer, or four or more light modulation devices.

Also, the light modulation device 44 is described as having a configuration having a transmission-type liquid crystal panel in which the light incident surface and the light exiting surface are different. However, the light modulation device 44 may have a reflection-type liquid crystal panel in which the light incident surface and the light exiting surface are the same. Moreover, a light modulation device without using liquid crystal, such as a device using a micromirror, for example, DMD (digital micromirror device), may be used, provided that the light modulation device can modulate an incident luminous flux and thus form an image corresponding to image information.

The projector 1 is described as having the image projection device 4 configured as shown in FIG. 2. However, the shape and configuration of the image projection device 4 are not limited to the example shown in FIG. 2.

The embodiment describes an example in which the light source device according to the invention is applied to a projector. However, this is not limiting. The light source device 5 (light source unit 6) may be applied to a light source device of an illumination apparatus or the like.

### Reference Signs List

1 ... projector, 44 (44B, 44G, 44R) ... light modulation device, 46 ... projection optical device, 5 ... light source device, 51 ... parallelizing lens (optical component), 52 ... first retardation element (optical component), 53 ... homogenizer optical device (optical component), 54 ... light combining device (optical component), 55 ... first pickup optical device (optical component), 56 ... wavelength conversion device (optical component), 561 ... wavelength conversion element, 57 ... second retardation element (optical component), 58 ... second pickup optical device (optical component), 59 ... diffusion element (optical component), 61 ... first light source section (light source section), 62 ... second light source section (light source section), 63 ... light combining member, 64 ... condensing lens, 65 ... outer casing (light source casing), 651, 652 ... fixing sections, 6521 ... opening, 653 ... handle section, 6531 ... opening, 654, 655 ... lateral side sections, 656 ... connecting section, 6561 ... opening, 657 ... fixing section, 68 ... inner casing (holding member), 69 ... energizing member, 7 ... accommodation casing, 71 ... first casing, 712 ... opening, 713 to 716 ... groove part, 72 ... second casing, 722 to 725 ... protruding part (pressing part), EM1 to EM4 ... elastic member, FL (FLA, FLB) ... lens (aspheric lens, Fresnel lens), FL2 (FL21, FL22) ... small lens, LA ... light emission area, SC ... screw, SS ... solid-state light source (light emitting element).

## Claims

1. A light source device (5) comprising:
a first light source section (61) and a second light source section (62) configured to emit light along two different directions; and
a light combining member (63) configured to combine the light emitted from the first light source section with the light emitted from the second light source section; **characterized in that** the light source device further comprises
a light source casing (65) to which the first light source section and the second light source section are attached outside;
a holding member (68) configured to hold the light combining member, the holding member accommodated inside the light source casing, and
a condensing lens (64) configured to condense the light combined together by the light combining member,
wherein the holding member is fixed inside the light source casing,
the first light source section has a first light emission area and a second light emission area which are arranged at a first interval along a first direction,
the second light source section has a third light emission area and a fourth light emission area which are arranged at the first interval along the first direction,
the condensing lens has
a first aspheric lens (FLA) on which light emitted from the first light emission area and the light emitted from the third light emission area become incident,
a second aspheric lens (FLB) on which light emitted from the second light emission area and the light emitted from the fourth light emitted area become incident,
the first aspheric lens and the second aspheric lens are arranged at a second interval along the first direction, and
the first and the second light source sections and the first and the second aspheric lenses are arranged in such way that the first interval and the second interval correspond to each other.

2. The light source device according to claim 1,
wherein the holding member is configured to hold the condensing lens.

3. The light source device according to claim 2, further comprising
an energizing member (69) configured to energize the condensing lens towards the holding member.

4. The light source device according to one of claims 1 to 3, further comprising:
an optical component on which light emitted from the light source casing becomes incident; and
an accommodation casing (7) configured to accommodate the optical component, the accommodation casing connected to the light source casing,
wherein the accommodation casing has
a first casing (71) having an opening in which the optical component is inserted, wherein the inserted optical component is arranged inside the first casing, and
a second casing (72) laid over the opening, the second casing combined with the first casing.

5. The light source device according to claim 4, further comprising
an elastic member (EM1 to EM4) arranged between the first casing and the second casing.

6. The light source device according to claim 5, wherein
one casing of the first casing and the second casing has a groove part (713 to 716) formed along an outer edge of the one casing, the elastic member being arranged inside the groove part,
the other casing has a pressing part configured to press the elastic member inserted in the groove part, and
the elastic member is an elastically deformable tube.

7. The light source device according to claim 1, wherein
the light combining member has a plurality of first incident parts on which light emitted from the first light source section becomes incident and a plurality of second incident parts on which light emitted from the second light source section becomes incident,
the plurality of first incident parts and the plurality of second incident parts are arranged along the first direction respectively,
the first and second light emission areas and the third and fourth light emission areas are arranged shifted from each other in the first direction, and
the first and second light source sections and the first and second aspheric lenses are arranged in such a way that the second interval corresponds to a dimension in the first direction of each of the first intervals shifted from each other in the first direction.

8. The light source device according to claim 7, wherein
the first light source section and the second light source section are attached to the light source casing in such a way that the light emitted from the first light source section and the light emitted from the second light source section intersect each other,
the plurality of first incident parts is configured to transmit the light emitted from the first light source section, and
the plurality of second incident parts is configured to reflect the light emitted from the second light source section towards the condensing lens.

9. The light source device according to claim 1, claim 7 or claim 8, wherein
the first and second aspheric lenses are made up of a Fresnel lens having a plurality of small lenses.

10. The light source device according to one of claim 1, claim 7, claim 8 or claim 9, comprising:
a parallelizing lens (51) configured to parallelize the light incident from the condensing lens;
a wavelength conversion element (561) configured to convert a wavelength of a part of the light parallelized by the parallelizing lens;
a diffusion element (59) configured to diffuse another part of the light parallelized by the parallelizing lens; and
a light combining device (54) configured to combine the light converted by the wavelength conversion element and the light diffused by the diffusion element.

11. The light source device according to claim 1 or any of claims 7 to 10, wherein
each of the first to fourth light emission areas is formed by a plurality of light emitting elements.

12. A projector (1) comprising:
the light source device according to one of claims 1 to 11;
a light modulation device (44) configured to modulate light emitted from the light source device; and
a projection optical device (46) configured to project the light modulated by the light modulation device.

## Patentansprüche

1. Lichtquellenvorrichtung (5), umfassend:
einen ersten Lichtquellenabschnitt (61) und einen zweiten Lichtquellenabschnitt (62), die gestaltet sind, Licht entlang zweier verschiedener Richtungen auszustrahlen; und
ein Lichtkombinationselement (63), das gestaltet ist, das Licht, das von dem ersten Lichtquellenabschnitt ausgestrahlt wird, mit dem Licht, das von dem zweiten Lichtquellenabschnitt ausgestrahlt wird, zu kombinieren; **dadurch gekennzeichnet, dass** die Lichtquellenvorrichtung weiter umfasst
ein Lichtquellengehäuse (65), an dessen Außenseite der erste Lichtquellenabschnitt und der zweite Lichtquellenabschnitt befestigt sind;
ein Halteelement (68), das gestaltet ist, das Lichtkombinationselement zu halten, wobei das Halteelement das Lichtquellengehäuse im Inneren aufnimmt, und
eine Kondensierungslinse (64), die gestaltet ist, das Licht, das von dem Lichtkombinationselement kombiniert wurde, zu kondensieren,
wobei das Halteelement im Inneren des Lichtquellengehäuses fixiert ist,
der erste Lichtquellenabschnitt einen ersten Lichtausstrahlungsbereich und einen zweiten Lichtausstrahlungsbereich aufweist, die in einem ersten Abstand entlang einer ersten Richtung angeordnet sind, der zweite Lichtquellenabschnitt einen dritten Lichtausstrahlungsbereich und einen vierten Lichtausstrahlungsbereich aufweist, die in dem ersten Abstand entlang der ersten Richtung angeordnet sind,
die Kondensierungslinse
eine erste asphärische Linse (FLA), auf die Licht, das von dem ersten Lichtausstrahlungsbereich ausgestrahlt wird, und das Licht, das von dem dritten Lichtausstrahlungsbereich ausgestrahlt wird, einfallen,
eine zweite asphärische Linse (FLB), auf die Licht, das von dem zweiten Lichtausstrahlungsbereich ausgestrahlt wird, und das Licht, das von dem vierten Lichtausstrahlungsbereich ausgestrahlt wird, einfallen,
aufweist, wobei die erste asphärische Linse und die zweite asphärische Linse in einem zweiten Abstand entlang der ersten Richtung angeordnet sind und
der erste und der zweite Lichtquellenabschnitt und die erste und die zweite asphärische Linse derart angeordnet sind, das der erste Abstand und der zweite Abstand einander entsprechen.

2. Lichtquellenvorrichtung nach Anspruch 1,
wobei das Halteelement gestaltet ist, die Kondensierungslinse zu halten.

3. Lichtquellenvorrichtung nach Anspruch 2, weiter umfassend
ein Energetisierungselement (69), das gestaltet ist, die Kondensierungslinse zu dem Halteelement zu energetisieren.

4. Lichtquellenvorrichtung nach einem der Ansprüche 1 bis 3, weiter umfassend:
eine optische Komponente, auf die Licht, das von dem Lichtquellengehäuse ausgestrahlt wird, einfällt; und
ein Aufnahmegehäuse (7), das gestaltet ist, die optische Komponente aufzunehmen, wobei das Aufnahmegehäuse mit dem Lichtquellengehäuse verbunden ist,
wobei das Aufnahmegehäuse
ein erstes Gehäuse (71) mit einer Öffnung, in die die optische Komponente eingesetzt ist, wobei die eingesetzte optische Komponente im Inneren des ersten Gehäuses angeordnet ist, und
ein zweites Gehäuse (72), das über der Öffnung liegt, wobei das zweite Gehäuse mit dem ersten Gehäuse kombiniert ist,
aufweist.

5. Lichtquellenvorrichtung nach Anspruch 4, weiter umfassend
ein elastisches Element (EM1 bis EM4), das zwischen dem ersten Gehäuse und dem zweiten Gehäuse angeordnet ist.

6. Lichtquellenvorrichtung nach Anspruch 5, wobei ein Gehäuse des ersten Gehäuses und des zweiten Gehäuses ein Rillenteil (713 bis 716) aufweist, das entlang einer Außenkante des einen Gehäuses gebildet ist, wobei das elastische Element im Inneren des Rillenteils angeordnet ist,
das andere Gehäuse ein Pressteil aufweist, das gestaltet ist, das elastische Element, das in das Rillenteil eingesetzt ist, anzupressen, und
das elastische Element ein elastisch verformbarer Schlauch ist.

7. Lichtquellenvorrichtung nach Anspruch 1, wobei
das Lichtkombinationselement mehrere erste Einfallsteile, auf welche Licht, das von dem ersten Lichtquellenabschnitt ausgestrahlt wird, einfällt, und mehrere zweite Einfallsteile, auf welche Licht, das von dem zweiten Lichtquellenabschnitt ausgestrahlt wird, einfällt, aufweist,
wobei die mehreren ersten Einfallsteile und die mehreren zweiten Einfallsteile jeweils entlang der ersten Richtung angeordnet sind,
der erste und zweite Lichtausstrahlungsbereich und der dritte und vierte Lichtausstrahlungsbereich in der ersten Richtung zueinander verschoben angeordnet sind und
der erste und zweite Lichtquellenabschnitt und die erste und zweite asphärische Linse derart angeordnet sind, dass der zweite Abstand einer Abmessung in der ersten Richtung jedes der ersten Abstände, die in der ersten Richtung zueinander verschoben sind, entspricht.

8. Lichtquellenvorrichtung nach Anspruch 7, wobei
der erste Lichtquellenabschnitt und der zweite Lichtquellenabschnitt an dem Lichtquellengehäuse derart befestigt sind, dass das Licht, das von dem ersten Lichtquellenabschnitt ausgestrahlt wird, und das Licht, das von dem zweiten Lichtquellenabschnitt ausgestrahlt wird, einander schneiden,
wobei die mehreren ersten Einfallsteile gestaltet sind, das Licht, das von dem ersten Lichtquellenabschnitt ausgestrahlt wird, durchzulassen, und
die mehreren zweiten Einfallsteile gestaltet sind, das Licht, das von dem zweiten Lichtquellenabschnitt ausgestrahlt wird, zu der Kondensierungslinse zu reflektieren.

9. Lichtquellenvorrichtung nach Anspruch 1, Anspruch 7 oder Anspruch 8, wobei
die erste und zweite asphärische Linse aus einer Fresnel-Linse mit mehreren kleinen Linsen gebildet sind.

10. Lichtquellenvorrichtung nach einem von Anspruch 1, Anspruch 7, Anspruch 8 oder Anspruch 9, umfassend:
eine parallelisierende Linse (51), die gestaltet ist, das Licht, das von der Kondensierungslinse einfällt, zu parallelisieren;
ein Wellenlängenumwandlungselement (561), das gestaltet ist, eine Wellenlänge eines Teils des Lichts umzuwandeln, das durch die parallelisierende Linse parallelisiert wurde;
ein Diffusionselement (59), das gestaltet ist, einen anderen Teil des Lichts, das durch die parallelisierende Linse parallelisiert wurde, zu diffundieren; und
eine Lichtkombinationsvorrichtung (54), die gestaltet ist, das Licht, das von dem Wellenlängenumwandlungselement umgewandelt wurde, und das Licht, das von dem Diffusionselement diffundiert wurde, zu kombinieren.

11. Lichtquellenvorrichtung nach Anspruch 1 oder einem von Ansprüchen 7 bis 10, wobei
jeder der ersten bis vierten Lichtausstrahlungsbereiche durch mehrere Lichtausstrahlungselemente gebildet wird.

12. Projektor (1), umfassend:
die Lichtquellenvorrichtung nach einem der Ansprüche 1 bis 11;
eine Lichtmodulationsvorrichtung (44), die gestaltet ist, Licht, das von der Lichtquellenvorrichtung ausgestrahlt wird, zu konfigurieren; und
eine optische Projektionsvorrichtung (46), die gestaltet ist, das Licht, das von der Lichtmodulationsvorrichtung moduliert wurde, zu projizieren.

## Revendications

1. Dispositif source de lumière (5) comprenant :
une première section de source de lumière (61) et une deuxième section de source de lumière (62) configurées pour émettre de la lumière le long de deux directions différentes ; et
un élément de combinaison de lumière (63) configuré pour combiner la lumière émise par la première section de source de lumière avec la lumière émise par la deuxième section de source de lumière ; **caractérisé en ce que** le dispositif source de lumière comprend en outre :
un boîtier de source de lumière (65) auquel la première section de source de lumière et la deuxième section de source de lumière sont fixées à l'extérieur ;
un élément de maintien (68) configuré pour maintenir l'élément de combinaison de lumière, l'élément de maintien étant logé à l'intérieur du boîtier de source de lumière, et
une lentille de concentration (64) configurée pour concentrer la lumière combinée ensemble par l'élément de combinaison de lumière,
dans lequel l'élément de maintien est fixé à l'intérieur du boîtier de source de lumière,
la première section de source de lumière a une première zone d'émission de lumière et une deuxième zone d'émission de lumière qui sont agencées à un premier intervalle le long d'une première direction, la deuxième section de source de lumière a une troisième zone d'émission de lumière et une quatrième zone d'émission de lumière qui sont agencées selon la premier intervalle le long de la première direction,
la lentille de concentration a
une première lentille asphérique (FLA) sur laquelle la lumière émise par la première zone d'émission de lumière et la lumière émise par la troisième zone d'émission de lumière deviennent incidentes,
une deuxième lentille asphérique (FLB) sur laquelle la lumière émise par la deuxième zone d'émission de lumière et la lumière émise par la quatrième zone d'émission de lumière deviennent incidentes,
la première lentille asphérique et la deuxième lentille asphérique sont agencées à un deuxième intervalle le long de la première direction, et
les première et deuxième sections de source de lumière et les première et deuxième lentilles asphériques sont agencées de manière à ce que le premier intervalle et le deuxième intervalle correspondent l'un à l'autre.

2. Dispositif source de lumière selon la revendication 1,
dans lequel l'élément de maintien est configuré pour maintenir la lentille de concentration.

3. Dispositif source de lumière selon la revendication 2, comprenant en outre :
un élément d'excitation (69) configuré pour exciter la lentille de concentration vers l'élément de maintien.

4. Dispositif source de lumière selon l'une des revendications 1 à 3, comprenant en outre :
un composant optique sur lequel la lumière émise à partir du boîtier de source de lumière devient incidente ; et
un boîtier de logement (7) configuré pour loger le composant optique, le boîtier de logement étant connecté au boîtier de source de lumière,
dans lequel le boîtier de logement a
un premier boîtier (71) ayant une ouverture dans laquelle le composant optique est inséré, dans lequel le composant optique inséré est agencé à l'intérieur du premier boîtier, et
un deuxième boîtier (72) posé sur l'ouverture, le deuxième boîtier étant combiné avec le premier boîtier.

5. Dispositif source de lumière selon la revendication 4, comprenant en outre :
un élément élastique (EM1 à EM4) agencé entre le premier boîtier et le deuxième boîtier.

6. Dispositif source de lumière selon la revendication 5, dans lequel
un boîtier parmi le premier boîtier et le deuxième boîtier a une partie de rainure (713 à 716) formée le long d'un bord extérieur de ce boîtier, l'élément élastique étant agencé à l'intérieur de la partie de rainure,
l'autre boîtier a une partie de pression configurée pour presser l'élément élastique inséré dans la partie de rainure, et
l'élément élastique est un tube élastiquement déformable.

7. Dispositif source de lumière selon la revendication 1, dans lequel
l'élément de combinaison de lumière a une pluralité de premières parties d'incidence sur lesquelles la lumière émise par la première section de source de lumière devient incidente et une pluralité de deuxièmes parties d'incidence sur lesquelles la lumière émise par la deuxième section de source de lumière devient incidente,
la pluralité des premières parties d'incidence et la pluralité des deuxièmes parties d'incidence sont agencées respectivement le long de la première direction,
les première et deuxième zones d'émission de lumière et les troisième et quatrième zones d'émission de lumière sont agencées de manière décalée entre elles dans la première direction, et
les première et deuxième sections de source de lumière et les première et deuxième lentilles asphériques sont agencées de telle sorte que le deuxième intervalle correspond à une dimension dans la première direction de chacun des premiers intervalles décalés entre eux dans la première direction.

8. Dispositif source de lumière selon la revendication 7, dans lequel
la première section de source de lumière et la deuxième section de source de lumière sont fixées au boîtier de source de lumière de manière à ce que la lumière émise par la première section de source de lumière et la lumière émise par la deuxième section de source de lumière se croisent l'une l'autre,
la pluralité des premières parties d'incidence sont configurées pour transmettre la lumière émise par la première section de source de lumière, et
la pluralité des deuxièmes parties d'incidence sont configurées pour réfléchir la lumière émise par la deuxième section de source de lumière vers la lentille de concentration.

9. Dispositif source de lumière selon la revendication 1, la revendication 7, ou la revendication 8, dans lequel
les première et deuxième lentilles asphériques sont formées par une lentille de Fresnel ayant une pluralité de petites lentilles.

10. Dispositif source de lumière selon l'une parmi la revendication 1, la revendication 7, la revendication 8 ou a revendication 9, comprenant :
une lentille de parallélisation (51) configurée pour paralléliser la lumière incidente à partir de la lentille de concentration ;
un élément de conversion de longueur d'onde (561) configuré pour convertir une longueur d'onde d'une partie de la lumière parallélisée par la lentille de parallélisation ;
un élément de diffusion (59) configuré pour diffuser une autre partie de la lumière parallélisée par la lentille de parallélisation ; et
un dispositif de combinaison de lumière (54) configuré pour combiner la lumière convertie par l'élément de conversion de longueur d'onde et la lumière diffusée par l'élément de diffusion.

11. Dispositif source de lumière selon la revendication 1 ou l'une quelconque des revendications 7 à 10, dans lequel,
chacune des première à quatrième zones d'émission de lumière est formée par une pluralité d'éléments d'émission de lumière.

12. Projecteur (1), comprenant :
le dispositif source de lumière selon l'une des revendications 1 à 11 ;
un dispositif de modulation de lumière (44) configuré pour moduler la lumière émise par le dispositif source de lumière ; et
un dispositif optique de projection (46) configuré pour projeter la lumière modulée par le dispositif de modulation de lumière.
